(19) Europäisches Patentamt
European Patent Office
Office européen des brevets

(11) **EP 2 254 690 B1**

## (12) EUROPÄISCHE PATENTSCHRIFT

(45) Veröffentlichungstag und Bekanntmachung des Hinweises auf die Patenterteilung:
**04.11.2020 Patentblatt 2020/45**

(21) Anmeldenummer: **09709542.6**

(22) Anmeldetag: **02.02.2009**

(51) Int Cl.:
**B01J 2/00** *(2006.01)*

(86) Internationale Anmeldenummer:
**PCT/EP2009/051137**

(87) Internationale Veröffentlichungsnummer:
**WO 2009/100995 (20.08.2009 Gazette 2009/34)**

(54) **LAGERSTABILE PRODUKTSYSTEME FÜR PRÄMIXFORMULIERUNGEN, HERSTELLUNG UND VERWENDUNG DAVON**

STORAGE-STABLE PRODUCT SYSTEMS FOR PREMIX FORMULATIONS, MANUFACTURE AND USE THEREOF

SYSTÈMES DE PRODUITS STABLES AU STOCKAGE POUR DES FORMULATIONS DE PRÉMÉLANGE, FABRICATION ET LEUR UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.02.2008 DE 102008000290**

(43) Veröffentlichungstag der Anmeldung:
**01.12.2010 Patentblatt 2010/48**

(73) Patentinhaber: **Evonik Operations GmbH 45128 Essen (DE)**

(72) Erfinder:
• **TSCHERNJAEW, Juri**
 **63743 Aschaffenburg (DE)**
• **STENNER, Patrik**
 **63452 Hanau (DE)**
• **PISULA, Wojciech**
 **55118 Mainz (DE)**
• **DREXEL, Claus-Peter**
 **63263 Neu-Isenburg (DE)**
• **GOTTHEIS, Martina**
 **63505 Langenselbold (DE)**
• **SEITZ, Tanja**
 **63505 Langenselbold (DE)**
• **Hitzler,Martn G.**
 **83342 Tacherting (DE)**

(74) Vertreter: **Evonik Patent Association c/o Evonik Industries AG IP Management Bau 1042A/PB 15 Paul-Baumann-Straße 1 45772 Marl (DE)**

(56) Entgegenhaltungen:
**EP-A2- 0 005 302    WO-A1-03/082360**
**CA-A1- 2 438 438    CH-A5- 573 212**
**US-A- 4 414 005**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft lagerstabile Produktsysteme mit hoher Latenz und guter mechanischer Stabilität, welche u. a. für Prämixformulierungen geeignet sind. Ferner betrifft die vorliegende Erfindung ein Verfahren zur Herstellung der erfindungsgemäßen Formulierungen sowie deren Verwendung.

Die Formulierung von Wirkstoffen zu Produktsystemen, welche die zeitlich verzögerte Freigabe von Wirkstoffen ermöglicht, weist gegenüber der konventionellen Verabreichung von Wirkstoffen erhebliche Vorteile auf. So kann die Dosierung der Wirkstoffe und der Ort der Freisetzung gesteuert und die Wirkstoffe über einen längeren Zeitraum kontinuierlich abgegeben werden. Dadurch kann häufig eine bessere Verwertung und eine Verringerung der benötigten Wirkstoffmenge erreicht werden, was wiederum Nebenwirkungen reduziert, die Umweltbelastung verringert und natürliche Ressourcen schont.

Auch Produktsysteme für die gesteuerte Freisetzung von empfindlichen Wirkstoffen sind aus der Literatur bekannt. Diese Systeme werden eingesetzt, um die unerwünschte Umwandlung oder Zersetzung zu vermeiden und die Lagerfähigkeit von empfindlichen Wirkstoffen zu verbessern. Des Weiteren können bei einigen Anwendungen, beispielsweise im Bereich der Bauchemikalien oder bei Klebstoffen, Handhabungsvorteile erzielt werden.

Im Bereich der pharmazeutischen Produkte wird vielfach eine gezielte Freisetzung der Wirkstoffe in einem vorgegebenen Bereich des Körpers erwünscht. Für diese Ziele wurden ebenfalls Produktsysteme entwickelt. Produktsysteme mit verzögerter Wirkstofffreigabe werden ebenfalls häufig im pharmazeutischen Bereich eingesetzt. Hier kommt es darauf an, einen Wirkstoff möglichst gleichmäßig über einen längeren Zeitraum zu verabreichen oder den Wirkstoff an bestimmten Stellen des menschlichen oder tierischen Körpers freizusetzen. Ein umfassender Bericht dazu findet sich z.B. in "Modified-Release Drug Delivery Technology" (M.J. Rathbone, J. Hadgraft, M.S. Roberts, editors), Marcel Dekker Inc., New York, 2003. Ähnliche Produktsysteme wurden auch für kontrollierte Freisetzung von Pestiziden und weiteren Pflanzenschutzmitteln entwickelt. Eine umfassende Übersicht zu diesem Thema findet sichin Park et al., "Controlled release of pesticides from microparticles", Seiten 89-136 in: Controlled-Release Delivery Systems for Pesticides (H.B. Scher, editor). Marcel Dekker Inc., New York, 1999.

Ein häufig verwendetes Konzept zur gezielten Wirkstofffreigabe basiert auf der Einbettung des Wirkstoffs in einer geeigneten Matrix, wobei die Matrix meist eine organische Polymer-Substanz ist. Die Matrix kann derart gestaltet sein, dass der Wirkstoff durch Diffusion durch die Matrix oder durch die Erosion bzw. Auflösung der Matrix langsam an deren Oberfläche gelangt, wo er mit einem geeigneten Lösungsmittel in Kontakt gebracht wird. In einer anderen Variante ist das Matrixmaterial derart gestaltet, dass ein Lösungsmittel durch das Matrixmaterial diffundiert und somit zum Wirkstoff gelangt. Beide Systeme haben den Nachteil, dass die Diffusion ein relativ langsamer Prozess ist und keine größeren Mengen an Wirkstoff auf einmal freigesetzt werden können. Beide Systeme eignen sich somit nur für Einsatzgebiete in denen es auf lang andauernde, gleichmäßige Wirkstofffreisetzung ankommt. Weiterhin befindet sich bei einer solchen Partikelstruktur ein beträchtlicher Teil des Wirkstoffes direkt auf der Oberfläche, was sehr oft sowohl zur Zersetzung empfindlicher Wirkstoffe bei der Lagerung als auch zur unerwünschten sofortigen Freisetzung des Wirkstoffes führen kann. Dieses Problem ist besonders ausgeprägt, wenn das Produktsystem in Form von Mikropartikeln mit einem mittleren Durchmesser unterhalb von 200 $\mu$m dargestellt wird.

Beispiele für Systeme mit organischer Matrix sind die in WO 2004/072153 und WO 03/033027 beschriebenen Produkte. Nachteilig ist hierbei die geringe Stabilität, insbesondere die geringe Druckbelastbarkeit dieser Systeme, wobei diese geringe Belastbarkeit Probleme bei der Lagerung verursachen kann. Des Weiteren ist der Einsatz dieser Produkte vielfach auf chemisch wenig aggressive Wirkstoffe beschränkt.

Ein anderes System umfasst die Einbindung eines Wirkstoffes in ein poröses Trägermaterial, z.B. ein anorganisches Oxid, und Verschließen von Teilen der Poren durch ein Schutzsystem. Dadurch wird erreicht, dass nur ein Teil der Poren für ein Lösungsmittel zugänglich sind und somit die Wirkstofffreigabe verlangsamt wird. Nachteilig an diesem System ist jedoch, dass das System den Wirkstoff freigibt, sobald es mit dem Lösungsmittel in Berührung kommt, d.h. bei löslichen Wirkstoffen und Premixformulierungen mit zu mindest einem entsprechenden Lösemittel sind solche Produktsysteme für eine gezielte Freigabe des Wirkstoffes am Anwendungsort ungeeignet, da der Wirkstoff bereits bei der Vorvermischung in Kontakt mit dem Lösemittel kommt und freigesetzt wird.

Eine Weiterentwicklung des o. g. Produktsystems umfasst die vollständige Umhüllung eines Wirkstoff enthaltenden porösen Trägermaterials mit einer Schutzschicht, so dass alle Poren durch die Schutzschicht verschlossen sind. Die Wirkstofffreigabe kann dann entweder durch Diffusion des Wirkstoffes durch die Schutzschicht erfolgen, was wiederum ein langsamer Prozess ist und in der Regel zu unvollständiger Wirkstofffreigabe führt. Alternativ kann der Wirkstoff in solchen Systemen nach Auflösung der Schutzschicht freigesetzt werden. Da die Schutzschicht außerhalb des Trägermaterials aufgebracht wird, sind diese Systeme sehr empfindlich gegenüber mechanischen Belastungen bei der Herstellung, Transport oder Verwendung der Produktsysteme. D.h. es kommt durch mechanische Einwirkung zu einer zumindest teilweisen Zerstörung der Schutzschicht, so dass eine unerwünschte Wirkstofffreigabe dadurch ausgelöst wird. Somit können solche Systeme nur in speziellen Bereichen eingesetzt werden. Beispiele für solche Systeme finden sich unter anderem in WO 02/098998, WO 00/51724, WO 2006/004481, CH 573212, EP-A-0 454 881 und CA 2 438 438.

Die in der Druckschrift WO 02/098998 offenbarten Produkte umfassen eine anorganische Matrix, die durch einen Sol/ Gel-Prozess erzeugt werden. Hierbei wird zunächst ein Wirkstoff mit einem Trägermolekül komplexiert und das so erhaltene Produkt wird in eine Matrix eingelagert, die durch einen Sol/ Gel-Prozess erzeugt wird. Diese Verfahren sind aufwendig und komplex in der Handhabung, wobei die Produktfreisetzung über die bei der Bildung der Matrix erzeugten Kavitäten erfolgt. Hierdurch wird keine aktive Freisetzung der Komponenten ermöglicht, vielmehr werden die Substanzen in einer Matrix fixiert und in Gegenwart eines Lösungsmittels freigesetzt, ohne dass der Zeitpunkt der Freisetzung gesteuert werden könnte. So erfolgt die Freisetzung des Wirkstoffes unmittelbar durch Zugabe von Lösungsmittel. Eine Freisetzung zu einem späteren Zeitpunkt ist nicht möglich.

Die Druckschrift WO 2006/004481 offenbart ein Zusatzstoff für Futtermittel, der antimikrobielle Eigenschaften aufweist. Der Zusatzstoff umfasst einen porösen Träger sowie Säuren, die als Wirkstoffe in den Träger eingebracht wurden. Zur Kontrolle der Freisetzung umfasst das System einen Kern mit einer starken Säure und eine äußere Schicht, die eine Säure umfasst, die einen höheren pH-Wert aufweist, als die Säure des Kerns. Die Steuerung der Freisetzung erfolgt hierbei über eine Diffusionskontrolle, wobei die äußere Schicht porös sein kann, um eine Diffusion der Säure des Kerns nach außen zu ermöglichen.

Des Weiteren beschreibt das Dokument WO 00/51724 ein System zur kontrollierten Freisetzung von Wirkstoffen, welches eine anorganische Matrix umfasst. Die Freisetzung des Wirkstoffes kann durch Diffusion gesteuert werden. Dies bedeutet, dass über die Porengröße die Freisetzungsgeschwindigkeit beeinflusst werden kann. Allerdings können derartige Systeme daher nicht zusammen mit einer Flüssigkeit, in dem der Wirkstoff löslich ist, gelagert werden, da hierbei der Wirkstoff zwangsläufig in die Lösung diffundiert. Zwar wird in WO 00/51724 auch die Möglichkeit einer gesteuerten Freisetzung des Wirkstoffs dargelegt, wobei verschiedene Steuerungssignale beschrieben werden; eine konkrete Lösung für das Problem einer durch ein äußeres Signal gesteuerten Freisetzung wird jedoch nicht beschrieben.

Weiterhin stellt die Druckschrift CH 573212 eine Zusammensetzung dar, die insbesondere in der Landwirtschaft eingesetzt werden kann. Diese Zusammensetzung umfasst ein poröses Trägermaterial, beispielsweise Kieselgur, einen Wirkstoff und eine Schutzschicht, beispielsweise aus organischen Verbindungen, die eine Verzögerung der Wirkstofffreisetzung bewirkt. Die Schutzschicht ist hierbei in einem Lösungsmittel, insbesondere Wasser löslich. Bei Kontakt mit Wasser wird die Schutzschicht nach einer durch die Löslichkeit der Schutzschicht bestimmten Zeit aufgelöst. Nach der Auflösung der Schutzschicht erfolgt die Freisetzung des Wirkstoffs unter Diffusionskontrolle. Nachteilig an diesem System ist jedoch eine schlechte Handhabung, die eine Verarbeitung dieser Systeme erschwert. Bei Kontakt mit Feuchtigkeit neigen diese Systeme vielfach zur Aggregation, durch die ein kontrolliertes Ausbringen erschwert wird. Bei einer Mischung dieser Zusammensetzung mit weiteren Stoffen sind hierdurch auch Probleme mit dem Einhalten von Mischungsverhältnissen verbunden.

Die Anmeldung EP-A-0 454 881 stellt eine Zusammensetzung dar, die ein poröses Trägermaterial umfasst, das mit einer Säure beladen ist. Des Weiteren weist die Zusammensetzung mehrere Schichten auf, welche eine gesteuerte Freisetzung der Säure ermöglichen, wobei die äußerste Schicht Verbindungen ("anticoalescent") umfassen kann, die eine Agglomeration der Partikel verhindern können. Die Freisetzung der Säure kann über verschiedene Verfahren erfolgen, die jeweils mit einer Auflösung oder einer Zerstörung der Schutzschichten einhergehen. Nachteilig ist hierbei insbesondere die Verarbeitbarkeit oder Handhabung der Partikel. So können die Säuren bei einer unsachgemäßen Behandlung der Zusammensetzung ungewollt freigesetzt werden. Dies ist insbesondere für die Anlagen kritisch, in denen diese Zusammensetzungen verarbeitet werden, da die Säuren zu einer Korrosion der Anlagen führen können. Anlagen aus säurefesten Materialien sind jedoch teuer. Werden derartige Anlagen eingesetzt, so können die Säuren auch direkt verarbeitet werden.

Das Dokument CA 2 438 438 offenbart poröse Silikatpartikel, die mit Wirkstoff beladen sind. Die Partikel sind mit einer Schicht versehen, die eine gesteuerte Freisetzung des Wirkstoffs ermöglichen. Die in diesem Dokument dargelegten Partikel weisen die gleichen Probleme auf, die auch die Partikel gemäß CH 573212 und EP-A-0 454 881 zeigen.

Ferner ist aus US 4414005 ein System bekannt bei dem Verbindungen, Elemente oder Ionen in Zeolithen eingeschlossen sind, wobei die Poren beispielweise mit Silanen oder Boranen verengt oder geschlossen werden.

Aus WO 03/082360 sind sphärische Polymerpartikel mit einem internen Reservoir, enthaltend therapeutische Mittel, bekannt.

Aus EP 0005302 ist ein Verfahren zur Imprägnierung von porösen Partikeln bekannt, wobei die Freisetzung durch eine poröse Membran erfolgt.

Es besteht somit nach wie vor ein großer Bedarf an geeigneten Produktsystemen, welche eine hohe Stabilität gegenüber mechanischen Belastungen aufweisen und eine schnelle und möglichst vollständige Wirkstofffreisetzung an einem bestimmten Ort bzw. ab einem bestimmten Zeitpunkt erlauben. D.h. diese Produktsysteme sollen während der Lagerung bzw. beim Transport zum Wirkort möglichst keinen Wirkstoff, am Wirkort jedoch möglichst schnell und vollständig den kompletten Wirkstoff freisetzen.

Aufgabe der vorliegenden Erfindung war es daher neuartige Produktsysteme herzustellen, welche die zuvor genannten Nachteile der Produktsysteme des Standes der Technik nicht oder nur in verringertem Umfang aufweisen. Ferner soll ein Verfahren zur Herstellung solcher Produktsysteme zur Verfügung gestellt werden.

Weitere nicht explizit genannte Aufgaben ergeben sich aus dem Gesamtzusammenhang der Beschreibung, Beispiele und Ansprüche der vorliegenden Erfindung.

Die zuvor genannte Aufgabe wird überraschend durch neuartige Produktsysteme gelöst wie sie in den Ansprüchen der vorliegenden Erfindung sowie in der nachfolgenden Beschreibung definiert und charakterisiert werden. Diese neuartigen Produktsysteme zeichnen sich dadurch aus, dass ein Trägermaterial mit zumindest einem Wirkstoff und zumindest einem Schutzsystem beladen wird, wobei dass Schutzsystem weitestgehend in den Poren des Trägermaterials und nicht auf dessen Oberfläche angeordnet ist. Ferner wird sichergestellt, dass alle bzw. weitgehend alle Poren des Trägermaterials derart mit dem Schutzsystem gefüllt sind, dass kein Lösungsmittel in Kontakt mit dem Wirkstoff kommen kann. Im Gegensatz zu Produktsystemen des Standes der Technik weisen die erfindungsgemäßen Produktsysteme den Vorteil auf, dass es nicht zu unerwünschten Wirkstofffreisetzungen kommt.

Das Schutzsystem der erfindungsgemäßen Produktsysteme ist zudem so ausgestaltet, dass es gezielt deaktiviert werden kann, so dass spontan der ganze Wirkstoff oder zumindest ein großer Teil des Gesamtwirkstoffs freigesetzt wird. Die erfindungsgemäßen Produktsysteme weisen somit eine sehr gute Latenz auf. Diese Latenz ist derart ausgestaltbar, dass vor der Deaktivierung annähernd keine bzw. keine Wirkstofffreisetzung, danach jedoch spontan eine Wirkstofffreisetzung erfolgen kann.

Dadurch, dass das Schutzsystem zum größten Teil bzw. vollständig in den Poren und nicht als Hülle um das Trägermaterial angeordnet ist, sind die erfindungsgemäßen Produktsysteme unempfindlich gegenüber mechanischen Belastungen. Dies bedeutet, dass die erfindungsgemäßen Formulierungen in Prämixen eingearbeitet werden können, ohne dass der Wirkstoff freigesetzt wird. Bei der Herstellung von Prämixen wirken zum einen mechanische Kräfte auf die Partikel ein (durch den Mischer), andererseits kommen die erfindungsgemäßen Formulierungen aber auch in Kontakt mit den weiteren Komponenten der Prämixformulierung. Die erfindungsgemäßen Produktsysteme können in solche Formulierungen eingearbeitet werden ohne bzw. weitgehend ohne dass der Wirkstoff freigesetzt wird. Sobald jedoch ein bestimmter Energieeintrag oder eine Veränderung des chemischen Umfeldes auf den Prämix einwirkt, wird der Wirkstoff spontan freigesetzt. Umwelteinflüsse wie z.B. Luftfeuchte und Kontakt mit Lösungsmittel führen nicht zu einer vorzeitigen Wirkstofffreisetzung, d.h. die erfindungsgemäßen Produktsysteme zeigen eine sehr gute Latenz. Beispielsweise können Wirkstoffe, die in Lebensmittel, z. B. Jogurt, enthalten sein sollen aber erst im Magen freigesetzt werden sollen, mit den erfindungsgemäßen Produktsystemen derart verkapselt werden, dass sie die Einarbeitung in den Jogurt und die Lagerung überstehen, ohne dass der Wirkstoff freigesetzt wird. Erst nach Kontakt mit der Magensäure wird dann der Wirkstoff spontan freigesetzt. Herkömmliche Produktsysteme mit "Core-Shell"-Aufbau sind nicht geeignet eine solche Aufgabe zu lösen, da bei der Einarbeitung des Produktsystems in den Jogurt, d.h. der Herstellung des Prämix, durch die mechanischen Einflüsse zumindest Teile der Schale zerstört werden, so dass im Laufe der Lagerung des Prämixes nach und nach Wirkstoff aus der Formulierung herausgelöst wird.

Das erfindungsgemäße Verfahren ist zudem kostengünstig und effizient, da preiswerte Trägermaterialen wie z. B. gefällte Kieselsäuren, in konventionellen Apparaturen mit dem Trägermaterial und dem Schutzsystem beladen werden können, ohne dass hierzu spezielle Apparaturen notwendig wären. Auch bei Verpackung und Transport kann auf spezielle Maßnahmen verzichtet werden, was ökonomische Vorteile bringt. Schließlich ist es möglich, je nach Wahl des Schutzsystems und des Auslösemechanismus beliebige zeitliche Freisetzungsszenarien zu erfüllen. So kann z. B. eine Mischung aus zwei Produktsystemen hergestellt werden, in der ein Teil der Partikel mit einem Schutzsystem ausgestattet ist, welches den Wirkstoff nach Erreichen einer bestimmten Temperatur freisetzt, der andere Teil der Partikel den Wirkstoff bei dieser Temperatur jedoch nicht freisetzt, sondern durch pH-Wert Änderung der Wirkstoff freigesetzt wird. Somit können Wirkstoffe auch gezielt an unterschiedlichen Orten freigesetzt werden.

Schließlich ist es auch möglich eine zeitlich verzögerte Wirkstofffreisetzung über einen längeren Zeitraum zu ermöglichen, welche jedoch erst zu einem ganz bestimmten Zeitpunkt beginnt, d.h. der eine Latenzzeit vorgeschaltet ist. In dieser Ausgestaltungsform der vorliegenden Erfindung könnte z.B. der Wirkstoff in einer Matrix aus der er herausdiffundieren muss in einen Träger eingebracht werden und zusätzlich die Poren mit einem Schutzsystem versehen werden, welches den Kontakt des Wirkstoffes mit einem Lösungsmittel erst nach gezielter Beeinflussung ermöglicht. Durch die gezielte Wirkstofffreigabe der erfindungsgemäßen Formulierungen in Kombination mit der Latenz können zudem unerwünschte Nebenwirkungen vermieden werden. So ist es möglich erfindungsgemäße Produktsysteme herzustellen, die keinerlei Wirkstoff an der Oberfläche aufweisen und zudem keinerlei Kontakt zwischen Wirkstoff und der Umgebung ermöglichen. Dies ist bei Systemen des Standes der Technik mit unvollständigem Porenverschluss oder Diffusionsmechanismus nicht der Fall.

Gegenstand der vorliegenden Erfindung sind somit Produktsysteme gemäß Anspruch 1.

Die Beschreibung offenbart weiterhin Produktsysteme umfassend

- mindestens einen anorganischen und/oder organischen porösen Träger,

- mindestens einen Wirkstoff, der in den porösen Träger eingebracht ist, und

- mindestens eine weitere Substanz von der zumindest ein Teil der gesamten im Produktsystem vorhandenen Menge in den Poren des Trägermaterials eingebracht ist,

dadurch gekennzeichnet, dass diese weitere /weiteren Substanz und/oder Substanzen ein Schutzsystem für den Wirkstoff / die Wirkstoffe ausbildet / ausbilden welches derart ausgestaltet ist, dass durch eine Deaktivierung des Schutzsystems durch einen Energieeintrag und/oder chemische Umwandlung und/oder Auflösen des Schutzsystems, das Schutzsystems derart verändert wird, dass, bevorzugt spontan, mindestens 50 Gew. % des Wirkstoffes /der Wirkstoffe freigesetzt wird / werden.

Ebenfalls Gegenstand der vorliegenden Erfindung ist ein Verfahren gemäß Anspruch 11.

Schließlich ist Gegenstand der vorliegenden Erfindung die Verwendung der erfindungsgemäßen partikelförmigen Zusammensetzung zur Herstellung von Lebensmitteln, Futtermitteln, Arzneimitteln, Erzeugnissen für die Land und Forstwirtschaft, Kosmetika, Komponenten für Beschichtungs- und Klebeformulierungen, Komponenten für Sportausrüstung und Sportbekleidung sowie die genannten Erzeugnisse an sich. Die Gegenstände der vorliegenden Erfindung werden nachfolgend im Detail beschrieben. Die in der Beschreibung, den Zeichnungen, den Ansprüchen und der Zusammenfassung der vorliegenden Erfindung benutzen Begriffe sind wie folgt definiert.

Partikelförmig bzw. Partikel im Sinne der vorliegenden Erfindung bezeichnet einen dreidimensionalen Körper aus zumindest einem anorganischen und/oder organischen Material mit definierter äußerer Form, welche - je nach Größe des Partikels - mittels mikroskopischer Verfahren (Lichtmikroskop, Elektronenmikroskop etc.) festgestellt werden kann. Die erfindungsgemäßen Partikel können porös sein, d. h. Poren und/oder innere Hohlräume aufweisen.

Das erfindungsgemäße Produktsystem ist im Anspruch 1 beschrieben.

Es ist essenziell, dass ein möglichst großer Teil der äußeren Oberfläche des erfindungsgemäßen Produktsystems durch das Trägermaterial ausgebildet wird. Im Gegensatz zu Systemen des Standes der Technik befindet sich bei den erfindungsgemäßen Systemen der größte Teil der Gesamtmenge an Wirkstoff(en) und Schutzstoff(en) in den Poren des Trägers. Dadurch kann das Schutzsystem durch mechanische Einwirkungen nicht beschädigt werden wie es bei Systemen des Standes der Technik der Fall ist, bei denen die Poren vollständig, d.h. die bis zur maximalen Absorptionskapazität mit Wirkstoff gefüllt sind und der Schutzstoff eine eigenständige Hülle, wie bei einer Zwiebelschale, um den mit Wirkstoff gefüllten Träger bildet.

Die erfindungsgemäßen Trägermaterialien sind in der Regel stabil bei mechanischen Belastungen wie Transport und Umfüllen. Dadurch schützt das Trägermaterial das darin eingebettete Wirkstoff/Schutzstoffsystem. Bei den Systemen des Standes der Technik werden bei Zerstörung der äußeren Schutzstoffschale die Poren, welche bis an den Rand mit Wirkstoff gefüllt sind, freigelegt und der Wirkstoff kann entweichen, d.h. eine gezielte Wirkstofffreisetzung ist nicht mehr möglich.

Die erfindungsgemäßen Produktsysteme zeichnen sich somit dadurch aus, dass ihre äußere Oberfläche zumindest zum Teil durch das Trägermaterial gebildet wird. Erfindungsgemäß werden mindestens 10 %, besonders bevorzugt mindestens 15 %, ganz besonders bevorzugt mindestens 20 % der äußeren Oberfläche der erfindungsgemäßen Produktsysteme, nach Messung der äußersten Atomlage mittels XPS, durch das Trägermaterial bzw. nicht durch die Moleküle von Wirkstoff/Wirkstoffen und/oder Schutzstoff/Schutzstoffen gebildet.

Für spezielle Anwendungen ist es weiterhin von Vorteil, dass die äußere Oberfläche der erfindungsgemäßen Produktsysteme frei von Wirkstoff(en) ist, damit diese Wirkstoffanteile keine vorzeitige unerwünschte Reaktion auslösen. In einer besonderen Ausführungsform der vorliegenden Erfindung befindet sich auf der äußeren Oberfläche der erfindungsgemäßen Produktsysteme, nach Messung der äußersten Atomlage mittels XPS, kein Wirkstoff bzw. werden maximal 10 %, bevorzugt maximal 5 %, besonders bevorzugt maximal 1 % der äußeren Oberfläche von Wirkstoff bedeckt.

Das Produktsystem enthält zumindest einen poröses Trägermaterial mit darin adsorbiertem bzw. absorbierten Wirkstoff(en). Das Trägermaterial an sich ist vorzugsweise nicht oder nur gering in Wasser löslich. Erfindungsgemäß handelt es sich um Fällungskieselsäuren oder Kieselgele in Form von Pulvern, Granulaten oder Mikrogranulaten mit einem mittleren Durchmesser $d_{50}$ größer gleich 3 $\mu$m. Insbesondere bevorzugt sind die im Handel erhältlichen Trägerkieselsäuren der Firma Evonik Degussa GmbH, z. B. Sipernat® 2200, Sipernat® 22, Sipernat® 50, MagSilica, der Firma Rhodia Chimie, z. B. Tixosil 38X oder Tixosil 68 oder der Firma PPG, z. B. HiSil SC 72 oder HiSil SC 60. Vergleichbare Trägerkieselsäuren anderer Firmen sind jedoch ebenfalls geeignet.

Das unbeladene anorganische und / oder organische poröse Trägermaterial weißt bevorzugt eine DBP-Absorption (gemäß DIN 53601) von mindestens 180 g/100 g auf. Die für DBP zugänglichen Poren sind auch für den Wirkstoff und die Stoffe des Schutzsystems zugänglich, daher ist eine hohe DBP wichtig, um eine hohe Beladung der Poren des Trägers mit Wirkstoff und Schutzstoff zu erreichen. Somit kann eine zu niedrige DBP-Aufnahme je nach Wirkstoff ineffektiv sein, da zu viel Trägermaterial verwendet werden muss. Die DBP-Aufnahme des Trägermaterials liegt vorzugsweise im Bereich von 180 bis 600 g/(100g), besonders bevorzugt von 180 bis 500 g / (100g), ganz besonders bevorzugt von 200 bis 500 g / (100g) und insbesondere bevorzugt von 240 bis 500 g / (100g), ganz besonders bevorzugt 240 bis 400 g/(100g) und speziell bevorzugt 240 bis 350 g/(100g).

Weiterhin hat es sich als vorteilhaft erwiesen, wenn das Trägermaterial und bevorzugt auch das ganze Produktsystem partikelförmig sind. Besonders vorteilhaft weisen die Partikel des Trägermaterials und / oder des Produktsystems eine mittlere Partikelgröße $d_{50}$ im Bereich von 5 μm bis 5000 μm, bevorzugt 5 μm bis 1000 μm, besonders bevorzugt von 5 bis 500 μm, ganz besonders bevorzugt von 5 bis 150 μm und insbesondere bevorzugt von 10 bis 100 μm auf. Sind die Partikel zu klein, so kann es zu unerwünschter Staubbildung kommen. Ferner wird die äußere Oberfläche im Vergleich zur inneren Oberfläche so groß, dass es schwierig oder gar unmöglich wird zu verhindern, dass der Wirkstoff auf der äußeren Oberfläche absorbiert wird. Zu große Partikel wiederum haben den Nachteil, dass sie oft mechanisch instabil und für eine weitere Verarbeitung ungeeignet sind. Sie sind weiterhin oft mit der Endformulierung nicht kompatibel und besitzen zu tiefe Poren, so dass die Absorptions- und Desorptionsgeschwindigkeiten zu langsam werden können bzw. Teile des absorbierten Wirkstoffes nicht mehr desorbiert werden können.

Es hat sich als vorteilhaft erwiesen, wenn das Gewichtsverhältnis von Schutzsystem zu Wirkstoff im Bereich von 10:1 bis 1:10 liegt. Das ideale Verhältnis hängt von der chemischen Natur und den physikalisch-chemischen Eigenschaften des Wirkstoffes und des Trägermaterials sowie des Schutzstoffes ab und kann für jede Materialkombination durch einfache Versuchsreihen bestimmt werden. Eine höhere Beladung des Trägermaterials kann dazu führen, dass nicht mehr genügend Schutzstoff in die Poren eingebracht werden kann, so dass die Latenz nicht mehr gewährleistet ist. Eine zu geringe Beladung ist wirtschaftlich nicht sinnvoll. Besonders bevorzugt liegt das Gewichtsverhältnis von Schutzsystem zu Wirkstoff im Bereich von 10 zu 1 bis 1 zu 10, ganz besonders bevorzugt im Bereich von 5 zu 1 bis 1 zu 5 und insbesondere bevorzugt im Bereich von 2 zu 1 bis 1 zu 3.

Neben dem Gewichtsverhältnis kann es je nach Materialkombination vorteilhaft sein, ein bestimmtes Verhältnis aus DBP-Absorption und absorbierter Menge Wirkstoff einzuhalten. Ohne an eine bestimmte Theorie gebunden zu sein, sind die Erfinder der Ansicht, dass DBP, die zu absorbierenden Wirkstoffe und die Schutzstoffe häufig einen ähnlichen Platzbedarf in den Poren des Trägermaterials haben und auch in ähnlich große Poren eindringen. Somit gibt dieses Verhältnis Auskunft darüber, wie viel Platz in den für den Schutzstoff zugänglichen Poren noch vorhanden ist und kann somit sicherstellen, dass eine hinreichende Menge Wirkstoff sowie Schutzstoff in die Poren eingebracht werden kann. So hat es sich als vorteilhaft erwiesen, dass die Beladung des porösen Trägers mit Wirkstoff mindestens 10 Gew. % bis 90 Gew. %, bevorzugt 10 Gew. % bis 80 Gew. %, besonders bevorzugt 20 bis 70 Gew. % und ganz besonders bevorzugt 30 Gew. % bis 60 Gew. % bezogen auf die DBP-Absorption des porösen Trägers, beträgt. In einer speziellen Ausführungsform beträgt die Beladung des porösen Trägers mit Wirkstoff 1 Gew. % bis 9 Gew. % bezogen auf die DBP-Absorption des porösen Trägers.

Wie bereits erläutert, ist ein wesentliches Merkmal der erfindungsgemäßen Kieselsäuren, dass die größte Menge an Schutzstoff innerhalb der Poren des Trägermaterials vorhanden ist und nicht auf der Oberfläche des Trägermaterials absorbiert ist. Dadurch kann verhindert werden, dass das Schutzsystem z. B. durch Abrieb beschädigt und inaktiviert wird. Aus gleichem Grund hat es sich als vorteilhaft erwiesen, die Absorbierte Menge an Schutzstoff im Verhältnis zur DBP-Aufnahme des Trägermaterials anzugeben. Es hat es sich als besonders vorteilhaft erwiesen, dass die Beladung des porösen Trägers mit Schutzstoff mindestens 10 Gew. % bis 90 Gew. %, bevorzugt 10 Gew. % bis 80 Gew. %, besonders bevorzugt 20 bis 70 Gew. % und ganz besonders bevorzugt 20 Gew. % bis 50 Gew. % bezogen auf die DBP-Absorption des porösen Trägers, beträgt. Ist die Beladung zu niedrig, so kann es je nach Porenstruktur des Trägermaterials zu einer Verschlechterung der Wirkung des Schutzsystems kommen. Eine zu hohe Menge an Schutzsystem kann sich nachteilig auf die gezielte Deaktivierung auswirken bzw. ist wirtschaftlich ineffektiv, da möglichst viel Wirkstoff und möglichst wenig Schutzstoff aufgenommen werden soll.

Unter Wirkstoffen werden in der vorliegenden Erfindung chemische Verbindungen bzw. Naturstoffe verstanden welche eine derart hohe Löslichkeit und/oder Reaktivität und/oder Instabilität unter den Vorverarbeitungs-, Lagerungs- bzw. Anwendungsbedingungen besitzen, dass sie ohne geeignete Schutzmaßnahmen nicht mit anderen Komponenten der Endformulierung vermischt und/oder gelagert und/oder an den Wirkort, d.h. den Ort an dem ihre Reaktivität entfacht werden soll, transportiert bzw. an dem Wirkort bis zum erwünschten Freisetzungszeitpunkt fixiert werden können. Es kann sich aber auch um chemische Substanzen handeln, welche zäh und wenig fließfähig sind und dadurch durch Absorption auf einen Trägermaterial fließfähig gemacht werden müssen, wobei die Desorption vom Trägermaterial jedoch weit möglich, bevorzugt ausschließlich, zu einem bestimmten Zeitpunkt schnell und vollständig erfolgen muss. Die Wirkstoffe können im Prinzip als Flüssigkeit, Öl, Harz, Lösung, Dispersion, Suspension oder als Schmelze vorliegen. Voraussetzung ist lediglich, dass der Wirkstoff in die Poren des Trägermaterials eindringen kann.

Zu den bevorzugten Wirkstoffen zählen unter anderem Härtungsmittel oder Initiatoren, Vernetzungsmittel, Katalysatoren, pharmazeutische Wirkstoffe, kosmetische Wirkstoffe, Reinigungs- und/oder Pflegemittel, Geschmacks-, Aroma- oder Duftstoffe, Futtermittel bzw. Futtermittelzusatzstoffen wie z. B. Aminosäuren, Vitamine, Mineralstoffe, Lebensmittel bzw. Lebensmittelzusatzstoffe, Farbstoffe und/oder Pigmente, Aminosäuren, Oxidations- oder Bleichmittel, Additive mit mikrobiozider, insbesondere fungizider oder bakterizider Wirkung, Agrarchemikalien und/oder ein Betonzusatzstoffe.

Hierzu gehören unter anderem Duftstoffe; Öle wie etherischen Öle, Parfümöle, Pflegeöle, Duftöle und Silikonöle; antibakterielle, antivirale oder fungizide Wirkstoffe; desinfizierend und antimikrobiell wirkende Substanze; Desodorantien; Antioxidantien; biologisch wirksame Stoffe und biogene Wirkstoffe; Vitamine und Vitaminkomplexe; Enzyme und enzymatische Systeme wie Amylasen, Cellulasen, Lipasen und Proteasen; kosmetisch aktiven Substanze wie Inhaltsstoffe für Kosmetika und Körperpflegemittel; wasch- und reinigungsaktive Substanzen wie Tenside aller Art, wasch- und/oder reinigungsaktive anorganische und organische Säuren, Soil-repellent-und Soil-release-Wirkstoffe, Oxidantien und Bleichmittel, Bleichmittelaktivatoren, Buildern und Cobuildern, Antiredepositionsadditive, Vergrauungs- und Verfärbungsinhibitoren, Wirksubstanzen zum Farbschutz, Substanzen und Additiven zur Wäschepflege, optischen Aufheller, Schauminhibitoren, pH-Stellmitteln und pH-Puffersubstanzen; UV-Schutzstoffe, UV-Absorber, Fluoreszenz- und Phosphoreszenzmittel; Farbstoffe, Farbstoffzusammensetzungen, Farbpigmente und andere färbende Substanzen wie solvatochromen und Indikatorfarbstoffe, Initiatoren und Härter; Katalysatoren und Pharmazeutika aller Art; sowie Mischungen der zuvor aufgeführten Verbindungen.

Die erfindungsgemäßen Produktsysteme können Duft-, Aroma und Geruchsstoffe enthalten. Derartige Stoffe sind allgemein bekannt und kommerziell erhältlich. Geeignete Duftstoffe sind beispielsweise in U.S. 5,500,138 beschrieben.

Wie hierin verwendet, umfassen Duftstoffe natürliche (d.h., beispielsweise durch Extraktion von Pflanzen, wie beispielsweise Blumen, Kräutern, Blättern, Wurzeln, Rinden, Hölzern, Blüten usw., oder tierischen Produkten gewonnene Stoffe), künstliche (d.h., eine Mischung der unterschiedlichen Naturölen oder Ölbestandteile) und synthetische (d.h. synthetisch hergestellte) wohlriechende Substanzen oder Mischungen dieser Substanzen. Solche Materialien werden häufig zusammen mit weiteren Verbindungen, wie Fixiermittel, Extender, Stabilisatoren und Lösungsmittel, verwendet. Diese Hilfs- oder Zusatzstoffe werden im Rahmen der vorliegenden Erfindung von der Bedeutung des Begriffes "Duftstoff" eingeschlossen. Gewöhnlich sind Duftstoffe daher komplexe Mischungen einer Vielzahl von organischen Verbindungen.

Zu den natürlichen Verbindungen gehören nicht nur leichtflüchtige Stoffe; diese umfassen auch mittelflüchtige und mäßigflüchtige Stoffe. Eine beispielhafte Zusammenstellung von Duftstoffen umfasst unter anderem folgende Verbindungen:
Naturstoffe, wie Baummoos absolut, Basilikumöl, Zitrusfruchtöle (wie Bergamottenöl, Mandarinenöl, etc.), Mastix absolut, Myrtenöl, Palmarosaöl, Öle der Patschulipflanze, Petitgrainöl, insbesondere aus Paraguay, Wermutöl; Alkohole, wie Farnesol, Geraniol, Linalool, Nerol, Phenylethylalkohol, Rhodinol, Zimtalkohol; Aldehyde, wie Citral, Helional, $\alpha$-Hexylzimtaldehyd, Hydroxycitronellal, Lilial (p-tert-Butyl-$\alpha$-methyldihydrozimtaldehyd), Methylnonylacetaldehyd; Ketone, wie Allylionon (1-(2,6,6-Trimethyl-2-cyclohexen-1-yl)-1,6-heptadien-3-on), $\alpha$-Ionon, $\beta$-Ionon, Isomethyl-alpha-ionon, Methylionon; Ester, wie Allylphenoxyacetat, Benzylsalicylat, Cinnamyl-propionat, Citronellylacetat, Citronellyl-ethoxolat, Decylacetat, Dimethylbenzylcarbinyl-acetat, Dimethylbenzylcarbinyl-butyrat, Ethylacetoacetat, Ethylacetylacetat, Hexenylisobutyrat, Linalylacetat, Methyl-dihydrojasmonat, Styrallyl-acetat, Vetiveryl-acetat, etc.; Lactone, wie gamma-Undecalacton; verschiedene Bestandteile, die häufig zur Herstellung von Parfümen eingesetzt werden, wie Moschusketon, Indol, p-Menthan-8-thiol-3-on und Methyleugenol; und Acetale und Ketale wie Methyl- und Ethylacetale und -ketale, sowie die Acetale oder Ketale, die auf Benzaldehyd basieren, die Phenylethyl-Gruppen enthalten, oder Acetale und Ketale der Oxotetraline und Oxoindane (vgl. US-A-5,084,440).

Des Weiteren umfassen Duftstoffe, die erfindungsgemäß verwendbar sind, Geranylacetat, Dihydromyrcenylacetat (2,6-Dimethyl-oct-7-en-2-yl-acetat), Terpinylacetat, Tricyclodecenyl-acetat (CAS 5413-60-5), Tricyclodecenylpropionat (CAS 17511-60-3), 2-Phenylethylacetat, Benzylacetat, Benzylbenzoat, Styrallylacetat, Amylsalicylat, Phenoxyethylisobutyrat, Nerylacetat, Trichloromethyl-phenylcarbinylacetat, p-tert.-Butyl-cyclohexylacetat, Isononylacetat, Cedrylacetat, Benzylalcohol, Tetrahydrolinalool, Citronellol, Dimethylbenzylcarbinol, Dihydromyrcenol, Tetrahydromyrcenol, Terpineol, Eugenol, Vetiverol, 3-Isocamphyl-cyclohexanol, 2-Methyl-3-(p-tert.-butylphenyl)-propanol, 2-Methyl-3-(p-isopropylphenyl)-propanol, 3- (p-tert.-Butylphenyl)-propanol, $\alpha$-n-Amylzimtaldehyd, 4-(4-Hydroxy-4-methylpentyl)-3-cyclohexenecarbaldehyd, 4-(4-Methyl-3-pentenyl)-3- cyclohexencarbaldehyd, 4-Acetoxy-3-pentyltetrahydropyran, 2-n-Heptylcyclopentanon, 3-Methyl-2-pentyl-cyclopentanon, n-Decanal, n-Dodecanal, Hydroxycitronellal, Phenylacetaldehyd-dimethylacetal, Phenylacetaldehyd-diethylacetal, Geranonitril, Citronellonitril, Cedrylmethylether, Isolongifolanon, Aubepine Nitrile, Aubepine, Heliotropin, Coumarin, Vanillin, Diphenyloxid, Ionon, Methylionon, Isomethylionon, cis-3-Hexenol and cis-3-Hexenol-Ester, Moschus-Verbindungen, die unter anderem eine Indan-, Tetralin oder Isochroman-Struktur aufweisen können, macrocyclische Ketone, Macrolacton-Moschusverbindungen, Ethylenbrassylat, aromatische Nitromuschusverbindungen. Die genannten Duftstoffe können einzeln oder als Mischung eingesetzt werden.

Die Aromastoffe, die für Gebrauch als Wirkstoff verwendbar sind, umfassen Wintergreen Oil, Oreganoöl, Lorbeerblattöl, Pfefferminzöl, Minzeöl, Nelkenöl, Salbeiöl, Sassafrasölen, Zitronenöl, Orangenöl, Anisöl, Benzaldehyd, Bittermandelöl, Kampfer, Zederblattöl, Majoranöl, Zitronengrasöl, Lavendelöl, Senföl, Kieferöl, Kiefernadelöl, Rosmarinöl, Thymianöl, Zimtblattöl sowie Mischungen dieser Substanzen.

Als Wirkstoff können organische und/oder anorganische Pigmente verwendet werden. Des Weiteren umfasst die Bezeichnung "Pigment" im Rahmen der vorliegenden Erfindung Materialien, die eine Abschwächung von Farbe oder Glanz bewirken, wie Stoffe, die zu einer Mattierung von Oberflächen oder Streuung von Licht führen. Beispiele der verwendbaren Pigmente sind Eisenoxide, Ultramarinblau, D & C Farbstoffe, Karmin und Mischungen dieser Stoffe. Die Pigmente können behandelt werden. Zu den Behandlungsmitteln zählen beispielsweise Aminosäuren, Silicone, Lezithin und Esteröle.

Zu den als Wirkstoffen verwendbaren Enzymen gehören unter anderem bakterielle und pilzartige Cellulasen wie Carezyme und Celluzyme (Novo Nordisk A/S); Peroxydasen; Lipasen wie Amano-P (Amano Pharmaceutical Co.), M1 Lipase® und Lipomax® (Gist-Brocades) und Lipolase® und Lipolase Ultra® (Novo); Cutinasen; Proteasen, wie beispielsweise Esperase®, Alcalase®, Durazym® und Savinase® (Novo) und Maxatase®, Maxacal®, Properase® und Maxapem® (Gist-Brocades); und α- and β-Amylasen wie Purafect Ox Am® (Genencor) und Termamyl®, Ban®, Fungamyl®, Duramyl® und Natalase® (Novo); und Mischungen dieser Enzyme untereinander sowie mit weiteren Wirkstoffen.

Kosmetische Wirkstoffe, insbesondere als Bestandteil von Haut- und Haarkosmetika umfassen unter anderem Vitamine und verschiedene lipophile oder hydrophobe Stoffe, die eine feuchtigkeitsspendende Wirkung (moisturising function) oder eine erweichende Wirkung (emollient function) haben, insbesondere Flüssigkeiten, Gele, Wachse, partikelförmige Feststoffe, usw. Zu den verwendbaren lipophilen oder hydrophoben Stoffen gehören unter anderem Fettsäuren wie Laurin- und Ölsäure; Ester von Fettalkoholen oder Fettsäuren, wie Isopropylmyristat und Isopropylpalmitat; wasserunlösliche Ether und Alkohole, wie Laurylalkohol, Hexadecylalkohol und Oleylalkohol, Paraffine und Mineralöle, Silicone und Mischungen dieser Verbindungen untereinander sowie mit weiteren Wirkstoffen. Diese Materialien werden unter anderem in den Dokumenten US-A4,053,851, US-A-4,065,564, US-A-4,073,880, US-A-4,278,655 und GB-A-2,018,590 beschrieben.

Zu diesen Stoffen gehören insbesondere auch Verbindungen, die in Zusammenhang mit haarkosmetischen Anwendungen eingesetzt werden, wie alkalische Verbindungen, insbesondere Na-OH, KOH, die insbesondere zur Herstellung von Dauerwellen verwendet werden.

Zu den Oxidations- und Bleichmittel gehören unter anderem Verbindungen, die Chlor oder Sauerstoff freisetzen, wie beispielsweise Wasserstoffperoxid, anorganische Peroxide und organische Peroxide.

Anorganische Peroxide umfassen unter anderem Perborate, Percarbonate, Perphosphate, Persulfate and Persilicate, wobei insbesondere die Alkalimetallsalze eingesetzt werden können.

Natriumperborat kann beispielsweise in Form des Monohydrats der Summenformel $NaBO2H2O2$ oder des Tetrahydrats gemäß der Summenformel $NaBO2H2O2*3H2O$ eingesetzt werden. Alkalimetallpercarbonate, insbesondere Natriumpercarbonat sind vielfach Komplexe von Alkalimetallcarbonat und Wasserstoffperoxid. Beispielsweise wird unter Natriumpercarbonat eine Komplexverbindung mit der Summenformel $2Na2CO3*3H2O2$ verstanden, wobei diese kommerziell erhältlich ist. Kaliumperoxymonopersulfat kann ebenfalls als Bleich- oder Oxidationsmittel eingesetzt werden.

Organische Peroxide umfassen beispielsweise Arylperoxysäuren, wie beispielsweise Perbenzoesäure, Alkylperoxysäuren, wie beispielsweise Peressigsäure und Pernonansäure, kationische Peroxysäuren und Amid-substituierte Peroxysäuren, die beispielsweise in EP-A-0 170 386 beschrieben sind. Weitere organische Peroxysäuren umfassen Diacyl- and Tetraacylperoxide, beispielsweise Diperoxydodecansäure, Diperoxytetradecansäure and Diperoxyhexadecansäure. Dibenzoylperoxide gehört zu den bevorzugten organischen Peroxysäuren. Mono- und Diperazelainsäure, Mono- und Dipererucasäure und N-Phthaloylaminoperoxicapronsäure sind ebenfalls geeignet.

Darüber hinaus stellen Härter und/oder Initiatoren eine wichtige Klasse von Wirkstoffen dar. Diese Verbindungen können unter anderem in Klebstoffen sowie in Bauchemikalien eingesetzt werden.

Zu diesen Stoffen gehören insbesondere Radikalstarter, die in einer Vielzahl von Anwendungen zum Einsatz kommen. Zu diesen Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxid, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Eine weitere Klasse von Wirkstoffen stellen Katalysatoren dar. Katalysatoren werden zur Beschleunigung einer Vielzahl von unterschiedlichen chemischen Reaktionen eingesetzt. Die vorliegende Erfindung ermöglicht insbesondere den sehr spezifischen Einsatz von Katalysatoren zu einem bestimmten Zeitpunkt, wobei eine besonders gleichmäßige Verteilung des Katalysators in der Reaktionsmischung auch zum Startzeitpunkt der Reaktion möglich wird.

Zu den bevorzugten Katalysatoren gehören insbesondere Metall umfassende Katalysatoren, die zur Hydrierung bzw. Hydrogenierung, beispielsweise zur Härtung von Fettsäuren, Nitrilen und Polyolhydrogenierung, Hydrogenierung von Harzen, Aromaten und Weißölen; selektive Hydrogenierung von Acetylenen und Dienen sowie selektive Hydrogenierung von AMS zu Cumol, eingesetzt werden.

Des Weiteren gehören hierzu Katalysatoren, die zur Oxidation eingesetzt werden, beispielsweise zur selektiven Oxidation bei der Herstellung von Ethylenoxid und Vinylacetatmonomeren.

Diese Katalysatoren umfassen im Allgemeinen Metalle, beispielsweise Nickel, Kobalt, Kupfer, Molybdän, Chrom, Eisen, sowie Platinmetalle, beispielsweise Rhodium, Palladium, Platin. Derartige Katalysatoren sind an sich bekannt und beispielsweise in Römpp Chemie Lexikon 2. Auflage auf CD-ROM sowie Ullmann's Encyclopedia of Industrial Chemistry, 5. Aufl. auf CD-ROM beschrieben.

Darüber hinaus können die Produktsysteme Wirkstoffe enthalten, die in der Landwirtschaft eingesetzt werden können. Diese umfassen beispielsweise Herbizide, Fungizide, Antibiotika, Düngemittel und Futterzusatzstoffe, beispielsweise Vitamine, Mineralstoffe und Hormone, sowie veterinärmedizinische Pharmazeutika, beispielsweise Antibiotika und Impfstoffe.

Des Weiteren sind Pharmazeutika eine Klasse von Wirkstoffen, die ebenfalls in den erfindungsgemäßen Produktsystemen als Wirkstoff enthalten sein können. Unter Pharmazeutika wird im Allgemeinen eine Substanz verstanden, die in vivo eine erwünschte Wirkung, insbesondere eine therapeutische Wirkung zeigt. Dementsprechend sind Pharmazeutika insbesondere Substanzen, die zur Behandlung von Krankheiten oder zur Erzielung einer sonstigen biologischen Wirkung eingesetzt werden können. Eine pharmakologisch aktive Substanz kann dementsprechend eine organische oder eine anorganische Verbindung sowie ein lebender oder toter Organismus sein. Hierzu gehören unter anderem Proteine, Polypeptide, Polysaccharide (z.B. Heparin), Oligosaccharide, Mono- oder Disaccharide, organische Verbindungen, organometallische oder anorganische Verbindungen, die jedes bekannte Element umfassen können; lebende oder tote Zellen, Bakterien, Viren oder ein Teil hiervon; Hormone; Wachstumfaktoren, beispielsweise Virus produzierende Wachstumsfaktoren; Wachstumfaktorenhemmer, Wachstumfaktorrezeptoren, Rezeptoren oder Rezeptorblocker (z.B. ein IIa/IIIb Hemmer) oder ein vollständiges oder teilweises Gen in einem geeigneten Expressionsvektor oder Konstrukt hiervon zur lokalen Erzeugung von therapeutischen Mitteln sein. Pharmazeutika schließen Mittel ein, die für eine langfristige Therapie eingesetzt werden, wie Hormonbehandlungen, beispielsweise zur Empfängnisverhütung, und Substanzen, die zur Behandlung von Krankheiten wie Osteoporose, Krebs, Epilepsie, Krankheit Parkinson und Schmerz besonders zweckmäßig sind. Die verwendbaren Pharmazeutika können, z.B. entzündungshemmende Mittel, Mittel zur Bekämpfung von Infektionskrankheiten (z.B. Antibiotika und Antivirenmittel), Analgetika und Analgetikum-Kombinationen, Mittel zur Behandlung von Asthma, krampflösende Mittel, Stärkungsmittel, Mittel zur Behandlung von Diabetes, Antitumormittel, Antikrebsmittel und Mittel sein, die zur Behandlung von Herzgefäß-Krankheiten oder psychischen Erkrankungen, beispielsweise Depressionen, benutzt werden.

Gemäß einem besonderen Aspekt der vorliegenden Erfindung können als Wirkstoff Verbindungen eingesetzt werden, die vorzugsweise ein Molekulargewicht von höchstens 2000 g/mol, besonders bevorzugt höchstens 1000 g/mol aufweisen.

Das Produktsystem der vorliegenden Erfindung kann ein oder mehrere Wirkstoffe umfassen. Hierbei können die Wirkstoffe als homogene Mischung innerhalb des porösen Trägers vorliegen. Weiterhin können die Wirkstoffe auch schichtförmig innerhalb des porösen Trägers angeordnet sein, wobei der poröse Träger zwei, drei oder mehr Schichten aufweisen kann, die sich in Art und Zusammensetzung der Wirkstoffe unterscheiden können.

Als Schutzsystem wird im Rahmen der vorliegenden Erfindung eine Substanz / eine Kombination aus mehreren Substanzen verstanden welche verhindert / verhindern, dass der Wirkstoff sich zersetzt und/oder frühzeitig reagiert und/oder ungewollt aus dem Trägermaterial austreten kann, jedoch gleichzeitig auch ermöglicht / ermöglichen, dass der Wirkstoff nach gezielter Deaktivierung des Schutzsystems möglichst schnell und vollständig freigesetzt werden kann.

Das Schutzsystem wird weitgehend, d.h. bevorzugt zu mindestens 30 Gew. %, besonders bevorzugt zu 50 Gew. %, ganz besonders bevorzugt zu 70 Gew. % - jeweils bezogen auf die eingesetzte Menge des Wirkstoffes - in die Poren des zuvor mit Wirkstoff imprägnierten Trägermaterials eingelagert, so dass sich in den Poren eine Wirkstoffschicht, welche näher zum Kern des Trägermaterials angeordnet ist und eine Schutzschicht welche zur äußeren Oberfläche des Trägermaterials hin angeordnet ist, ausbilden. Der Wirkstoff wird somit von Einflüssen der Umgebung abgeschirmt. Beispielsweise kann angenommen werden, dass durch die schützende Verbindung die Poren des anorganischen porösen Trägers, der partiell mit Wirkstoff versehen wurde, verschlossen werden. Nach einem partiellen Auflösen oder einer partiellen Zerstörung dieses Verschlusses der Poren kann der Wirkstoff freigesetzt werden.

Der Begriff "Schutzsystem" wurde gewählt, um klarzustellen, dass die vorliegende Erfindung keine übliche Beschichtung einsetzt, um eine kontrollierte Freisetzung von Wirkstoffen zu erzielen. Vielmehr ist das System so ausgelegt, dass eine hohe mechanische Stabilität mit einem sehr spezifischen Freisetzungsmechanismus verbunden wird.

Um ein wirkungsvolles Schutzsystem aufbauen zu können, ist es von Vorteil, wenn Wirkstoff und Schutzsystem eine unterschiedliche Polarität bzw. eine unterschiedliche Löslichkeit oder Dispergierbarkeit aufweisen, so dass sie sich nicht miteinander vermischen. Die Begriffe "löslich oder dispergierbar" bedeutet in diesem Zusammenhang, dass mindestens 1 g/l, bevorzugt mindestens 10 g/l und besonders bevorzugt mindestens 100 g/l einer Substanz in einem entsprechenden Lösungsmittel gelöst oder dispergiert werden können. Unlöslich sind Substanzen, falls weniger als 1,0 g/l, bevorzugt höchstens 0,5 g/l und besonders bevorzugt höchstens 0,05 g/l einer Substanz gelöst oder dispergiert werden können. Diese Werte beziehen sich auf die Temperatur, bei der die Beladung des Trägers mit dem Wirkstoff bzw. dem Schutzsystem stattfindet. Vorzugsweise wird die Löslichkeit in einem Temperaturbereich von 0 °C bis 100°C, besonders bevorzugt 25°C gemessen.

So kann es von Vorteil sein, wenn das Schutzsystem mindestens eine Verbindung umfasst, die in einem Lösungsmittel löslich ist, in welchem sich der Wirkstoff nicht löst. Besonders bevorzugt ist der Wirkstoff in einem polaren Lösungsmittel löslich und die Schutzschicht in Wasser und/oder in einem polaren Lösungsmittel unlöslich oder der Wirkstoff in einem unpolaren Lösungsmittel löslich und das Schutzsystem in diesem unpolaren Lösungsmittel unlöslich und/oder in einem polaren Lösungsmittel und/oder Wasser löslich. Als unpolare Lösungsmittel kommen hier insbesondere aromatische Kohlenwasserstoffe, Alkane oder ein Cycloalkane in Frage. Durch die unterschiedliche Polarität/Löslichkeit kann sichergestellt werden, dass sie Wirkstoff und Schutzsystem innerhalb der Poren nicht durchmischen sondern klar getrennte Schichten bilden, so dass eine effektive Deaktivierung der Schutzschicht möglich ist.

Gemäß einem besonderen Aspekt der vorliegenden Erfindung kann der Wirkstoff in einem polaren Lösungsmittel, beispielsweise Wasser, Methanol und/oder Ethanol gelöst werden, wohingegen die Schutzschicht in Wasser unlöslich ist. Zu diesen Wirkstoffen gehören insbesondere wasserlösliche Oxide und/oder Hydroxide, wie beispielsweise NaOH oder KOH. Vorzugsweise weist das Schutzsystem gemäß diesem Aspekt mindestens eine Verbindung auf, die in einem unpolaren Lösungsmittel, besonders bevorzugt einem aromatischen Lösungsmittel, wie Toluol, einem Alkan, insbesondere Hexan oder Heptan oder einem Cycloalkan, wie Cyclohexan, löslich ist.

Das Schutzsystem für den Wirkstoff / die Wirkstoffe ist vorzugsweise derart ausgebildet / dass durch eine Deaktivierung des Schutzsystems durch einen Energieeintrag und/oder chemische Umwandlung und/oder Auflösen des Schutzsystems, das Schutzsystems so verändert wird, dass, bevorzugt spontan, mindestens 50% des Wirkstoffes /der Wirkstoffe freigesetzt wird / werden.

Die Auswahl des Schutzmaterials hängt vorrangig von den Freisetzungsbedingungen ab. So kann z. B. die Freisetzung eines Radikalstarters in einem chemischen Reaktor das Ziel sein. Hier kann eine Deaktivierung des Schutzsystems über Druckwellen die Methode der Wahl sein, da diese sehr schnell und effektiv möglich ist. Soll z. B. ein Radikalquencher in einer Radikalkettenreaktion zugegeben werden aber erst dann mit den anderen Reaktanden in Kontakt kommen können, wenn die Reaktionstemperatur eine bestimmte Grenze überschritten hat - um ein "Durchgehen" der Reaktion zu verhindern - so wäre als Schutzsystem eine Substanz zu verwenden, welche bei Erreichen einer bestimmten Temperatur den Wirkstoff freisetzt. Durch geeignete Wahl des Schutzsystems kann somit ein Produktsystem mit hoher Latenz und Lagerstabilität für unterschiedlichste Anwendungszwecke hergestellt werden. Ein weiteres Beispiel sind hygroskopische kosmetische und / oder pharmazeutische Wirkstoffe, welche durch die menschliche Haut aufgenommen werden sollen. Diese Substanzen müssen, um lagerstabil zu sein, durch ein Schutzsystem geschützt werden und erst bei Kontakt mit der Haut, dann aber schnell und vollständig wieder freigesetzt werden. Für diese Anwendung ist ein pH-sensitives Schutzsystem die Wahl. Die zuvor genannten Beispiele schränken den Umfang der vorliegenden Erfindung keinesfalls ein, sondern dienen lediglich der Erläuterung und Klarstellung der vorliegenden Erfindung.

Im Falle der Deaktivierung des Schutzsystems durch Energieeintrag erfolgt der Energieeintrag bevorzugt durch DruckWellen, besonders bevorzugt durch Ultraschallbehandlung, Bestrahlung mit hochenergetischem Strahlung, bevorzugt UV-Licht und Mikrowellen und/oder durch Einwirkung von künstlich generierten Scherkräften und / oder Temperaturerhöhung. Unter dem Einfluß der Druckwellen (insbesondere Untraschallbehandlung) werden die partikulären Systeme "herausgesprengt", weil der poröse Trägerkörper und die in den Poren gelagerten Wirkstoffe und Schutzsysteme unter dem Einfluß der Druckwellen bzw. Kavitation mit unterschiedlichen Frequenzen schwanken (aufgrund von unterschiedlichen mechanischen Eigenschaften). Die Partikeln brechen auseinander und öffnen dem Außenmedium den Zugang zum nicht mehr geschützten Wirkstoff. Bei der Freisetzung durch Erhöhung der Temperatur wird der Transport des Wirkstoffes nach außen durch das Aufschmelzen und/oder durch das beschleunigte Auflösen des Schutzsystems im Außenmedium gewährleistet. Bei der Freisetzung durch das UV-Licht bzw. durch die Röntgenstrahlung wird das Schutzsystem durch die strahlungsbezogene chemische Reaktion "deaktiviert" bzw. "geöffnet", die oft mit der Temperaturerhöhung bis zum Schmelzpunkt verbunden ist. Bei der Freisetzung durch Mikrowellen wird ein Teil des verkapselten Systems lokal bis zur Bildung der Dampfphase erhitzt, der innere Druck im Partikel steigt an und führt ähnlich wie bei der Freisetzung unter Ultraschall zum Heraussprengen der Partikeln und Öffnung des Wirkstoffes. Eine andere Variante der Freisetzung durch Einwirkung von Mikrowellen ist die lokale Erhitzung des Verkapselungssystems bis zum Verschmelzen des Schutzsystems und daraus folgende Öffnung des Zugangs des Außenmediums zum Wirkstoff.

Werden Druckwellen, bevorzugt Ultraschallwellen auf das Produktsystem einwirken lassen, so werden in einer besonderen Ausführungsform der vorliegenden Erfindung mindestens 80 Gew. % des Wirkstoffes / der Wirkstoffe innerhalb 1 Stunde freigesetzt, bevorzugt mindestens 80 Gew. % in 10 Minuten, ganz besonders bevorzugt mindestens 80 Gew. % in 5 Minuten, speziell bevorzugt mindestens 80 Gew. % in 1 Minute oder weniger. Hierbei kann das Schutzsystem so aufgebaut werden, dass dieses bei einem vorgegebenen Belastungswert aufgelöst wird. Dies kann beispielsweise durch gezielte Auswahl des Materials sowie der Menge an Schutzsystem bezogen auf das Gesamtgewicht des Produkts erfolgen. Die Druckwellen können durch Variation der Frequenz und der Amplitude auf einen vorgegebenen Belastungswert eingestellt werden, bei dem die Auflösung des Schutzsystems erfolgt. Vorzugsweise können die Druckwellen eine Frequenz im Bereich von 15 kHz bis 100 kHz besonders bevorzugt im Bereich von 22 kHz bis 30 kHz und eine Amplitude im Bereich von 0 bis 250 $\mu$m, besonders bevorzugt im Bereich von 40 $\mu$m bis 100 $\mu$m aufweisen.

Wird hingegen hochenergetische Strahlung auf das Produktsystem einwirken lassen, so werden in einer weiteren besonderen Ausführungsform der vorliegenden Erfindung mindestens 80 Gew. % des Wirkstoffes / der Wirkstoffe innerhalb 12 Stunden, bevorzugt mindestens 80 Gew. % in 10 Stunden, ganz besonders bevorzugt mindestens 80 Gew. % in 5 Stunden, speziell bevorzugt mindestens 80 Gew. % in 1 Stunde oder weniger freigesetzt.

Beispiele für strahlungssensitive Schutzsysteme sind z.B. alle wasserhaltigen Schutzsysteme, die gezielt durch die Anwendung der Mikrowellentechnik lokal erhitzt werden können. Vorzugsweise kann die elektromagnetische Strahlung eine Frequenz im Bereich von 1 MHz bis 500 GHz, besonders bevorzugt in Bereichen von 902 MHz bis 928 MHz und 2,4 GHz bis 2,5 GHz aufweisen. Die elektromagnetische Strahlung kann auch auf andere Komponenten des Systems angepasst werden. So z.B. bei der Anwendung von Mischoxyden von Typ MagSilica® (Evonik Industries AG) als Träger bzw. als Bestandteil des Schutzsystems ist die elektromagnetische Strahlung mit einer Frequenz im Bereich von 280 MHz bis 320 MHz besonders bevorzugt.

Erfolgt die Deaktivierung des Schutzsystems hingegen bei erreichen einer bestimmten Freisetzungstemperatur, so werden in einer weiteren besonderen Ausführungsform der vorliegenden Erfindung mindestens 60 Gew % des Wirkstoffes / der Wirkstoffe innerhalb 60 Minute bevorzugt mindestens 80 Gew. % in 60 Minuten, ganz besonders bevorzugt mindestens 80 Gew. % in 45 Minuten, speziell bevorzugt mindestens 80 Gew. % in 30 Minute oder weniger. freigesetzt. In diesem Fall wird die Schutzschicht durch Temperaturerhöhung aufgelöst oder geschmolzen, wodurch der Wirkstoff freigesetzt wird. Gemäß diesem Gesichtspunkt der vorliegenden Erfindung kann das Schutzsystem vorzugsweise durch eine Temperatur im Bereich von 30 bis 200°C, besonders bevorzugt 40°C bis 160°C aufgelöst werden. Hierbei wird die Schutzschicht vorzugsweise innerhalb eines engen Temperaturintervalls zerstört. So kann das Temperaturintervall, bei dem das Schutzsystem aufgelöst oder geschmolzen wird, kleiner als 20°C, bevorzugt kleiner als 10°C und ganz besonders bevorzugt kleiner als 5°C sein.

Die chemische Deaktivierung des Schutzsystems kann zum Beispiel durch pH Wert Verschiebung und/oder Einwirkung zumindest eines Enzyms auf das Schutzsystem ausgelöst werden.

Erfolgt die Deaktivierung durch pH-Wert Änderung des Schutzsystems so werden in einer weiteren besonderen Ausführungsform der vorliegenden Erfindung mindestens 70 Gew. % des Wirkstoffes / Wirkstoffe innerhalb 8 Stunden, bevorzugt mindestens 80 Gew. % in 8 Stunden, ganz besonders bevorzugt mindestens 80 Gew. % in 5 Stunden, speziell bevorzugt mindestens 70 Gew. % in 1 Stunde oder weniger freigesetzt.

Beispiele für pH-sensitive Schutzsysteme sind z.B. ein Copolymer aus Methylmethacrylat und Ethylacrylat (Eudragit L 100-55/L, Acryl EZE, Eastacryl 30D), ein Copolymer aus Methylmethacrylat und Ethylacrylat und Methacrylsäure, ein (Meth)acrylatcopolymer, bestehend aus 20 - 40 Gew.-% Methylmethacrylat und 60 bis 80 Gew.-% Methacrylsäure (Eudragit L 100/L, S 100/S und weitere Modifikationen der Eudragit®-Produktgruppe), ein Copolymer aus Methylmethacrylat, Ethylacrylat und Trimethylammonium-ethylmethacrylat, ein Polyvinylacetatphtalat (PVAP, Coateric®, Sureteric®), eine vernetzte und/oder unvernetzte Polyacrylsäure, Hydroxypropyl methylcellulosephthalat (H.P.M.C.P. (Eastman), HP (Shin-Etsu)), Hydroxymehylethylcellulose (HEMC), Ethylcellulose (EC, Ethocel®, Aquacoat®, Surelease®), Celluloseacetatphtalat (CAP, Cellulosi acetas, PhEur, Celluloseacetate-Phtalate, NF, Aquateric®), Celluloseacetatsuccinat (CAS), Celluloseacetattrimeliat (CAT), Hydroxypropylmethylcellulosephtalat (HPMCP, HP50, HP55), Hydroxypropylmethylcelluloseacetatsuccinat (HPMCAS -LF, -MF, -HF) oder eine Mischung der genannten Polymere, Fettsäuren (z.B. Stearinsäure, Palmitinsäure) und eine Mischung der Fettsäuren, weitere polymere Säuren, beispielsweise Polyacrylate, die sich durch die geforderten Löslichkeiten in Abhängigkeit vom pH-Wert einerseits und durch eine gute Verarbeitbarkeit andererseits auszeichnen. Weitere polymere Säuren, die als Hüllmaterialien Verwendung finden können, sind Copolymere aus einer ungesättigten Polycarbonsäure wie Maleinsäure, Citraconsäure, Itaconsäure und Mesaconsäure mit einer ungesättigten Monocarbonsäure wie Acrylsäure oder $\alpha$- alkylsubstituierten Acrylsäuren.

Im Falle der Einwirkung von Enzymen auf das Schutzsystem werden in einer weiteren besonderen Ausführungsform der vorliegenden Erfindung mindestens 80 Gew. % des Wirkstoffes / der Wirkstoffe innerhalb 24 h, bevorzugt mindestens 80 Gew. % in 15 Stunden, ganz besonders bevorzugt mindestens 80 Gew. % in 10 Stunden oder weniger freigesetzt.

Beispiele für biologisch/enzymatisch deaktivierbare Schutzsysteme sind die im Stand der Technik bekannten natürlichen, halbsynthetischen oder synthetischen, anorganischen und insbesondere organischen Materialien, solange sichergestellt ist, dass die enzymatisch-gesteuerte Öffnung der resultierenden Gemische erhalten bleibt.

Natürliche organische Materialien sind beispielsweise Homo- und Heteropolymere aus Kohlenhydraten, Aminosäuren, Nukleinsäuren, Amide, Glucosamine, Ester, Gummi-arabicum, Agar Agar, Agarose, Maltodextrine, Alginsäure bzw. ihre Salze, z. B. Natrium- oder Calciumalginat, Liposomen, Fette und Fettsäuren, Cetylalkohol, Collagen, Chitosan, Lecithine, Gelatine, Albumin, Schellack, Polysaccharide, wie Stärke oder Dextran, Cyclodextrine, Sucrose und Wachse. Halbsynthetische Verkapselungsmaterialien sind unter anderem chemisch modifizierte Cellulosen, insbesondere Celluloseester und -ether, z. B. Celluloseacetat, Ethylcellulose, Hydroxypropylcellulose, Hydroxypropylmethylcellulose und Carboxymethylcellulose, sowie Stärkederivate, insbesondere Stärkeether und -ester.

Synthetische Verkapselungsmaterialien sind beispielsweise Polymere wie Aminoharze, Polyacrylate, Polyamide, Polyvinylalkohol oder Polyvinylpyrrolidon, Organopolysiloxane, nicht-natürliche Aminosäuren, nicht-natürliche Nukleinsäuren, Polyamine, Polyole, Oligo- und Polyisoprene, Ester und Polyester, insbesondere verzweigte Glycerinester Amide, Imine, Polyphenole, Dithiolen und Phosphodiester, Ethylenglykol, Oxymethylenglykosid, Acetaleinheiten, Silikaten und Carbonaten, hyperverzweigte Hydrogele, Kammpolymere mit Polyesterstruktur oder Polyvinylpyrrolidon, Polylactid.

Weiterhin bevorzugte mitverwendbare Trägerpolymere sind Polycaprolactone, Copolymere wie Poly(D,L-lactid-co-glycolide) sowie die von der Evonik Industries AG hergestellten Polyesterverbindungen aus den Produktfamilien Dynapol®S und Dynacoll®. Diese Polymere können auch als Beimischung zur Einstellung spezieller Polymereigenschaften dienen.

Durch Beimischung von diesen Polyestern kann die Zusammensetzung des Polymers so eingestellt werden, dass das resultierende Verkapselungsmaterial über kurz oder lang enzymatisch abgebaut werden kann. Weitere biologisch bzw. enzymatisch deaktivierbare Schutzsysteme wie hyperverzweigte Polymere sind ausführlich in der Patentanmeldung WO 2007/048464 beschrieben.

Weiterhin ist es möglich, die Deaktivierung des Schutzsystems durch Auflösen des Schutzsystems in einem geeigneten Lösungsmittel zu erreichen. Dabei wird das Produktsystem in das geeignete Lösungsmittel bzw. in ein Zweiphasensystem mit zwei Lösungsmitteln, von denen das eine das Schutzsystem und das andere den Wirkstoff auflöst, gegeben und bevorzugt innerhalb 24 Stunden mindestens 80 Gew. % des Wirkstoffes / der Wirkstoffe, bevorzugt mindestens 80 Gew. % in 15 Stunden, ganz besonders bevorzugt mindestens 80 Gew. % in 10 Stunden freigesetzt.

Beispiele für solche Schutzsysteme sind anorganische (z.B. $Na_2SO_4$) und anorganische (z.B. Natriumstearat) Salze, organische Säuren (z.B. Stearinsäre, Palmitinsäure), Polymere (wie Polyethylenglycol , Polyvinylchlorid), Copolymere, Alkohole (insbesondere Fettalkohole) sowie weitere chemische Substanzen, die unter gegebenen Freisetzungsbedingungen (Temperatur, Druck, Zusammensetzung) in einem am Freisetzungort vorhandenen Lösemittel löslich sind.

Die erfindungsgemäßen Produktsysteme zeigen eine hervorragende Latenz. Latenz bedeutet, dass die Produktsysteme während ihrer Herstellung, Lagerung und Transport keinen bzw. nur minimale Mengen an Wirkstoff freisetzen. Selbst bei der Einarbeitung der erfindungsgemäßen Produktsysteme in Prämixformulierungen und deren späterer Lagerung wird so lange kein bzw. nur minimale Mengen Wirkstoff freigesetzt, bis eine Aktivierung der erfindungsgemäßen Produktsysteme erfolgt, d.h. bis durch Energieeintrag bzw. chemische Einflüsse die Wirkstofffreigabe ausgelöst wird.

Wie zuvor bereits angedeutet, erlaubt das erfindungsgemäße Produktsystem maßgeschneiderte Lösungen für eine Vielzahl von Anwendungsfällen zu erschaffen. So können z.B. Mischungen aus zwei oder mehreren erfindungsgemäßen Produktsystem, welche gleiche oder unterschiedliche Wirkstoffe und unterschiedliche Schutzstoffe enthalten, hergestellt werden. Diese Gemische erlauben es beispielsweise, dass bei Erreichung einer bestimmten Temperatur 20 Gew. % des Wirkstoffs spontan freigesetzt werden, aus Formulierungen mit temperatursensitiver Schutzschicht und darunterliegenden Wirkstoff, die restlichen 80 Gew. % des Wirkstoffs jedoch über einen längeren Zeitraum konstant abgegeben werden aus einem 2. Produktsystem mit temperatursensitiver Schutzschicht und darunterliegendem in einer diffusionsoffenen Matrix eingebettetem Wirkstoff. Ein anderes Beispiel wäre ein Gemisch aus Produktsystemen von denen ein Teil des Wirkstoffs nach pH-Wertänderung, ein anderer Teil jedoch erst nach Einwirkung von Ultraschall freigesetzt wird. Mögliche Kombinationen von Wirkstoff / Schutzsystemen und Auslösemechanismen können anhand der obigen Beschreibung leicht abgeleitet werden und sind Teil der vorliegenden Erfindung, wenn auch nicht explizit beschrieben. In einem weiteren Beispiel kann die schützende Verbindung einen sehr spezifischen Schmelzpunkt aufweisen. Wird das Produktsystem auf Temperaturen oberhalb dieses Schmelzpunktes erhitzt, so wird der Wirkstoff freigesetzt, da die schützende Verbindung geschmolzen wird. Dieser Mechanismus kann beispielsweise im Bereich der Härter oder Initiatoren eingesetzt werden. Des Weiteren kann dieser Mechanismus für das Gebiet der Haarkosmetika verwendet werden.

Ein weiteres sehr spezielles Beispiel für erfindungsgemäße Produktsysteme gestaltet sich derart, dass der Wirkstoff latent, d.h. erst ab einem bestimmten Zeitpunkt, dann aber gleichmäßig über einen längeren Zeitraum freigesetzt wird. Hierzu kann zum Beispiel ein Wirkstoff zusammen mit einem Matrixmaterial in des Trägermaterial eingebracht und anschließend eine erfindungsgemäße Schutzschicht aufgebracht werden. Nach Deaktivierung der Schutzschicht erfolgt die Freisetzung des Wirkstoffs nun aus dem Matrixmaterial diffusionsgesteuert, so dass eine gleichmäßige Freisetzung über einen längeren Zeitraum gewährleistet ist.

Geeignete Verbindungen zur Herstellung des Schutzsystems, nachfolgend auch "schützende Verbindungen" genannt, sind im Allgemeinen bekannt, wobei die jeweilige Verbindung zur Herstellung dieses Systems gemäß dem Einsatzzweck und Anwendungsgebiet des Produktsystems ausgewählt werden kann. Beispielsweise kann die schützende Verbindung eine niedermolekulare, oligomere oder polymere Verbindung sein. Hierzu gehören beispielsweise hydrophile oder polare Polymere, insbesondere Polysaccharide, beispielsweise Cellulose, Cellulose-Derivate, wie Celluloseacetat, Methylcellulose, Carboxymethyl-Cellulose, vernetzte und unvernetzte Hydroxypropylcellulose, vernetzte und unvernetzte Polyhydroxypropylmethylcellulose, Stärke oder Stärkederivate, beispielsweise Hydroxyalkylstärke, Carboxymethyl-Stärke, vernetzte und unvernetzte Natriumcellulosexanthogenate, Polyvinylalkohole, Polymethacrylate, insbesondere Polymethylmethacrylate, Methacrylat/Divinylbenzol-Copolymere, Kaliummethacrylate/Divinylbenzol- Copolymere, Carboxymethylamid, Polyoxyalkylenglycole, vernetzte und unvernetzte Polyvinylpyrrolidone, Polyoxyethylenglycole und Polyvinylalkohole.

Des Weiteren kann mindestens eine niedermolekulare, hydrophile Verbindung zur Herstellung des Schutzsystems verwendet werden.

Des Weiteren kann die schützende Verbindung eine hydrophobe Substanz sein. Hierzu gehören unter Alkylcellulose-Polymere, die in Form von Latex-Suspensionen eingesetzt werden können, wie beispielsweise Surelease® (Colorcon GmbH, Deutschland), oder Celluloseacetatphthalat (Aquacoat® CPD; FMC, Deutschland) oder Methacrylsäurederivate, die unter anderem in Form von Suspensionen wie Eudragit® RS, RL und NE (Rohm Pharma, Deutschland) verwendeten werden können.

Darüber hinaus können auch Wachse als schützende Verbindung eingesetzt werden. Hierzu gehören unter anderem nichtionische Bienenwachsderivate wie Gelucire® 62/05, 50/02 oder 50/13 (Gattefosse Deutschland, Deutschland), Glyzerinbehenat, oder andere Fettsäure Mono -, Di oder Triester des Glycerins wie Precirol® ato 5 (Gattefosse Deutschland, Deutschland), mikrokristallines Wachs, hydriertes Rizinusöl oder hydriertes Pflanzenöl, langkettige aliphatische Alkohole, wie Stearylalkohol und Carnubawachs.

Weiterhin können Polyolefine oder Paraffine geeignete Verbindungen sein, um ein Schutzsystem herzustellen. Besonders geeignete Produkte sind unter der Bezeichnung Sasol Wax® von der Firma Sasol™ erhältlich, wobei insbesondere die Typen Sasol Wax® 5403, Sasol Wax® 5413, Sasol Wax® 5603 und Sasol Wax® 4110P zu erwähnen sind.

Schützende Verbindungen, die eine pH Abhängigkeit zeigen, umfassen Polymere, wie beispielsweise Polymethacrylsäurederivate, die in Form von Latexsuspensionen, wie Eudragit® L und S (Röhm Pharma, Deutschland) eingesetzt werden können, Aquacoat® CPD, Hydroxypropanol-methylcellulosephthalat (HPMCP), Polyvinylacetatphthalat, Hydroxypropanol- methylcelluloseacetatsuccinat, Schellack, Celluloseacetattrimellitat, Carboxymethylcellulose, Copolymere von Maleinsäure und Phthalsäurederivaten sowie Mischungen davon.

Außerdem kann die schützende Verbindungen zum Teil säurelösliche Bestandteile, beispielsweise in Form von den Polymeren, insbesondere Polyvinylpyrrolidon, Hydroxypropanolcellulose, Hydroxypropanolmethylcellulose, Polyethylenglykol, Polyvinylalkohol, oder in Form von niedermolekularen Stoffen, Zucker, Salze oder organische Säuren und Mischungen dieser Substanzen enthalten.

Des Weiteren können Tenside und/oder Emulgatoren eingesetzt werden, um ein Schutzsystem zu erzeugen. Hierzu gehören insbesondere Carbonsäuren und Carbonsäurederivate, wie Ester oder Amide von Carbonsäuren, die 6 bis 40, bevorzugt 8 bis 30 Kohlenstoffatome im Säurerest aufweisen. Zu den bevorzugten Carbonsäuren gehören unter anderem Kaprylsäure, Kaprinsäure, Laurinsäure, Myristinsäure, Palmitinsäure, Margarinsäure, Arachinsäure, Behensäure, Lignocerinsäure, Cerotinsäure, Palmitolsäure, Stearinsäure, Ölsäure, Elaidinsäure, Petroselinsäure, Ricinolsäure, Elaeostearinsäure, Linolsäure, Linolensäure, Eicosansäure, Gadoleinsäure, Docosansäure oder Erucasäure.

Das Schutzsystem des erfindungsgemäßen Produkts kann ein oder mehrere Schichten von schützenden Verbindungen aufweisen. Beispielsweise kann zweite schützende Verbindung auf die erste schützende Verbindung aufgebracht werden. Darüber hinaus kann die Zusammensetzung der schützenden Verbindungen eines Schutzsystems verändert werden, um einen schichtförmigen Aufbau zu erhalten.

Ein besonders bevorzugtes Schutzsystem kann einen schichtförmigen Aufbau aufweisen. Hierbei kann das schichtförmige Schutzsystem beispielsweise eine zum Kern ausgerichtete, erste Schicht, die eine hydrophobe erste schützende Verbindung, beispielsweise ein Paraffinwachs, umfasst und eine nach außen ausgerichtete, zweite schützende Schicht, die z. B. ein Tensid als schützende Verbindung umfasst, aufweisen. Die erfindungsgemäßen Produktsysteme können hergestellt werden in dem man einen Wirkstoff in einen porösen Träger einbringt und ein Schutzsystem erzeugt.

Dabei wird das im Anspruch 11 beschriebene Verfahren durchgeführt.

Als Feststoffmischeinheit in Schritt a) können zum Beispiel verwendet werden: Kneter, Schaufeltrockner, Taummelmischer, Vertikalmischer, Schaufelmischer, Schugimischer, Zementmischer, Gerickekontimischer, Eirichmischer und/oder Silomischer. Die Temperatur in der Mischeinheit beträgt in Abhängigkeit des Schutzsystems und des Wirkstoffes bevorzugt zwischen 5°C und 250 °C, besonders bevorzugt zwischen 60°C und 140°C.

Schritt b) ist optional, d.h. muss nicht zwingend durchgeführt werden. Durch evakuieren der Feststoffmischeinheit nach Zugabe des Trägermaterials kann jedoch erreicht werden, dass die Poren des Trägermaterials evakuiert und darin enthaltenes Gas bzw. Luft herausgezogen wird, so dass eine vollständigere Beladung des Trägermaterials mit Wirkstoff(en) und Schutzstoff(en) erreicht werden kann. Schritt c) ist ebenfalls optional und wird in Abhängigkeit von der Porenstruktur der Trägermaterials durchgeführt. Wie bereits mehrfach betont ist es für die Wirksamkeit des erfindungsgemäßen Schutzsystems notwendig, dass die Poren möglichst vollständig nach außen hin mit Schutzstoffen verschlossen sind, so dass der Wirkstoff vor Kontakt mit Lösungsmitteln geschützt wird. In den meisten porösen Trägermaterialien sind die Poren in einem mehr oder weniger komplexen System miteinander verbunden. Dadurch ist es möglich, dass enge Poren, in welche weder Wirkstoff noch Schutzstoff, z. B. wegen der Viskosität, eindringen können, wohl aber Lösungsmittel, im Innern des Trägermaterials eine Verbindung zu einer Pore aufweisen, in die der Wirkstoff eingedrungen ist. Auf diese Weise könnte der Fall eintreten, dass der Wirkstoff zwar nicht aus der eigentlichen Pore, in der er aufgesogen ist, herausgelöst werden kann, jedoch durch die kleinere "Nebenpore" Lösungsmittel im Inneren des Trägers in Kontakt mit dem Wirkstoff kommt und somit doch etwas Wirkstoff herausgelöst wird. Durch eine Vorimprägnierung des Trägermaterials mit dem Schutzsystem können solche unerwünschten Effekte vermieden werden, da dadurch diese "Seitenkanäle" verschlossen werden können, bevor der Wirkstoff absorbiert wird. In besonders bevorzugten Ausführungsformen wird Schutzstoff in Form einer Lösung oder als Schmelze eingetragen.

In Schritt d) wird der Wirkstoff bzw. mehrere Wirkstoffe in die Feststoffmischeinheit gegeben. Falls mehrere Wirkstoffe zugegeben werden sollen, können diese gleichzeitig oder nacheinander zugegeben werden. Die Wirkstoffe können - sofern flüssig - direkt zugegeben werden oder als Schmelze oder aber auch als Lösung oder in Form einer Dispersion oder einer Suspension zugegeben werden.

In Schritt e) wird der Wirkstoff / die Wirkstoffe in das Trägermaterial bzw. das vorimprägnierte Trägermaterial eingebracht. Dabei wird die Mischzeit/Einarbeitungszeit derart ausgestaltet, dass eine vollständige Eindringung der Wirkstoffe in die Poren gewährleistet wird. Die Imprägnierung mit einem Wirkstoff ist abgeschlossen, wenn die Rieselfähigkeit des Produktes gemessen mit den Auslauftrichtern nach DIN 53492 den Wert 1 hat. In einer besonders bevorzugten Ausführungsform wird der Wirkstoff in einem Lösungsmittel gelöst, die Lösung in den Träger eingebracht und das so erhaltene Produkt getrocknet, um das Lösungsmittel zu entfernen.

Für viele Anwendungsgebiete ist es wichtig, dass die Wirkstoffe tatsächlich erst zu einem bestimmten Zeitpunkt ihre Wirkung entfalten können, d.h. in solchen Fällen darf keinerlei Wirkstoff vorzeitig in Kontakt mit einem Reaktionspartner kommen. Da nun aber bei der Imprägnierung in Schritt e), d.h. beim Aufsaugen des Wirkstoffs in die Poren in der Regel nicht verhindert werden kann, dass zumindest einige wenige Wirkstoffmoleküle an der äußeren Trägeroberfläche anhaften, kann es je nach Anwendungsgebiet sinnvoll sein, diese Wirkstoffmoleküle in einem Schritt f) zu Inhibieren oder durch Waschen von der äußeren Trägeroberfläche zu entfernen um sicherzustellen, dass wirklich nur in den Poren aktiver Wirkstoff vorhanden ist. Beim Inhibieren wird an der Oberfläche liegender Wirkstoff durch einen entsprechenden Reaktand zu einer nicht reaktiven Substanz umgesetzt. Beim Waschen wird durch geeignetes Lösungsmittel der Wirkstoff abgewaschen. Je nach Wirkstoff sind mehrere Waschvorgänge notwendig. Sollte der Wirkstoff / die Wirkstoffe in Form einer Lösung oder Suspension zugegeben worden sein, so wird bevorzugt das Lösungsmittel vor Zugabe des Schutzstoffes bevorzugt durch Evakuieren oder Ausheizen entfernt.

In Schritt g) wird der Schutzstoff bzw. mehrere Schutzstoffe in die Feststoffmischeinheit gegeben. Falls mehrere Schutzstoffe zugegeben werden sollen, können diese gleichzeitig oder nacheinander zugegeben werden. Die Schutzstoffe können - sofern flüssig - direkt zugegeben werden oder als Schmelze oder aber auch als Lösung oder in Form einer Dispersion oder einer Suspension zugegeben werden. In besonders bevorzugten Ausführungsformen wird Schutzstoff in Form einer Lösung oder als Schmelze eingetragen. In Schritt h) muss dafür gesorgt werden, dass die Poren, möglichst vollständig gefüllt sind, da die Poren die von der Oberfläche zum Kern des Trägerpartikels führen, durch Zwischenporenkanäle miteinander verbunden sind, welche Lösungsmittel durchlassen und somit die Freisetzung des Wirkstoffs bedingen könnten.

Sollte der Schutzstoff / die Schutzstoffe in Form einer Lösung oder Suspension zugegeben worden sein, so wird bevorzugt das Lösungsmittel besonders bevorzugt durch Evakuieren oder Ausheizen entfernt.

Um überschüssigen Schutzstoff zu entfernen, kann, falls notwendig, in Schritt i) ein Waschschritt mit nachfolgender Trocknung erfolgen.

Abhängig vom Wirkstoff und Schutzsystem kann es sinnvoll sein, anstelle der Inhibierung bzw. des Wegwaschens des auf der äußeren Trägeroberfläche anhaftenden Wirkstoffs in Schritt f), diese Inhibierung bzw. diesen Waschvorgang nach Aufbringen der Schutzschicht, d.h. in Schritt j) durchzuführen. In der Regel wird es effektiver sein, das Waschen bzw. Inhibieren in Schritt j) Anstelle von Schritt f) durchzuführen, da in Schritt g) die Poren vom Schutzstoff verschlossen wurden und somit in Schritt j) nur noch die an der äußeren Oberfläche anhaftenden Wirkstoffmoleküle beseitigt werden. Es ist auch möglich, sowohl in Schritt f) als auch in Schritt j) zu waschen und / oder zu inhibieren. Es ist auch möglich, in Schritt f) und oder j) sowohl zu waschen als auch zu inhibieren.

In speziellen Fällen werden die Stufen b) bis e) und/oder g) bis h) mehrmals durchgeführt werden, wobei bei Wiederholung der Schritte d) und e) und/ oder g) und h) jeweils gleiche oder unterschiedliche Wirk- bzw. Schutzstoffe verwendet werden können. Ferner ist es vorteilhaft, den Schutzstoff bzw. den Wirkstoff in den Schritten c), d), e), g) und h) die Mischbedingungen derart zu wählen, dass der Wirkstoff bzw. Schutzstoff immer flüssig bleibt und nicht an der Oberfläche der Partikel austrocknet bzw. auskristallisiert.

In einer besonderen Ausführungsform des erfindungsgemäßen Verfahrens wird Schritt d) nicht nach, sondern vor Schritt a) durchgeführt, d.h. das Trägermaterial und der Wirkstoff/die Wirkstoffe werden gemischt bevor sie in die Feststoffmischeinheit gefüllt werden. Besondere Vorteile in diesem Fall liegen in der Gleichmäßigkeit der Wirkstoffverteilung in den Trägerpartikeln. Dies ist sehr wichtig bei einer hohen Wirkstoffbeladung (insbesondere im Bereich 60 bis 80% des DBP-Wertes), um anschließend alle Partikeln gleichmäßig mit dem Schutzsystem beladen zu können.

In einer weiteren besonderen Variante des erfindungsgemäßen Verfahrens kann eine Vorbehandlung des Trägermaterials mit Tensiden oder mit Silanen erfolgen bevor der Wirkstoff oder/oder Schutzsystem zugegeben wird. Dies kann zum einen zu einer Hydrophobierung des Trägers führen, wodurch es - abhängig von der Polarität des Trägers - erleichtert werden kann, dass der/die Wirkstoff(e) tief in die Poren eindringt/eindringen. Zum anderen kann dadurch aber auch erreicht werden, dass ultrafeine Poren verschlossen werden, was wünschenswert ist, da somit eine unerwünschte, schnelle Wirkstofffreigabe verhindert werden kann.

Grundsätzlich ist es auch möglich, die Schritte c) und d) gleichzeitig durchzuführen und ein Gemisch aus zumindest einem Wirkstoff und zumindest einem Schutzstoff zuzugeben. Das kann besonders dann sinnvoll sein, wenn der Schutzstoff in kleinere Poren eindringen kann als der Wirkstoff und somit der zuvor beschriebene Effekt, d.h. die "Abdichtung" von Seitenporen auch bei gleichzeitiger Einbringung von Schutz- und Wirkstoff möglich ist.

Um die Funktionalität der erfindungsgemäßen Produktsysteme zu gewährleisten, insbesondere die mechanische Stabilität, ist es notwendig, dass zum einen kein Wirkstoff auf der Trägeroberfläche, zum anderen aber auch, dass möglichst kein Schutzstoff auf der äußeren Trägeroberfläche vorhanden ist. Beide Komponenten sollten im Idealfall vollständig in den Poren des Trägermaterials aufgesogen sein. Um dies zu erreichen sollte die zugegebene Menge an Schutzstoff/Schutzstoffen in Schritt g) derart geregelt werden, dass die Gesamtmenge an Wirkstoff/Wirkstoffen plus Schutzstoff/Schutzstoffen die bei der Herstellung der Produktsysteme zugegeben wird 50% bis 100 % des DBP-Absorptionswertes (gemäß DIN 53601) des Trägermaterials entspricht.

Alternativ kann die Steuerung des Herstellungsprozesses aber auch über das Porenvolumen erfolgen, in diesem Fall wird bevorzugt die zugegebene Menge an Schutzstoff/Schutzstoffe in Schritt g) derart geregelt, dass die Gesamtmenge an Wirkstoff/Wirkstoffen und Schutzstoff/Schutzstoffen, die bei der Herstellung der Produktsysteme zugegeben wird, größer ist als das Gesamtporenvolumen des Trägermaterials und dass der Überschuss an Schutzstoff/Schutzstoffen durch Zugabe von Trägermaterial und/oder mit Wirkstoff/Wirkstoffen beladenem Trägermaterial absorbiert wird.

Die Mischintensitäten und die Dosierung im erfindungsgemäßen Verfahren sollten so aufeinander abgestimmt sein, dass die Riselfähigkeit am Ende des Auftragevorgangs gewährleistet ist, d.h. dass zu jeder Zeit im Mischer ein rieselfähiges Pulver vorliegt. Dadurch kann gewährleistet werden, dass der Schutz- bzw. Wirkstoff vollständig in die Poren aufgenommen wird und nicht an der äußeren Trägeroberfläche haftet. Wird zu schnell zudosiert oder zu wenig intensiv gemischt, kann es zu ungleichmäßigen Beladungen der Partikel kommen, was schließlich dazu führen kann, dass die Poren einiger Partikel vollständig mit Wirkstoff gefüllt sind und kein Schutzstoff mehr eindringen kann und somit keine Latenz erreicht werden kann. In diesem Zusammenhang sollte auch darauf geachtet werden, dass die Rührorgane, z. B. Firma IKA Duplex Mischorgan im Messkneter H60, so gewählt werden, dass durch Scherbeanspruchung kein Abrieb stattfindet. Die Überprüfung auf Abrieb an den Partikeln erfolgt durch Messung der Partikelgrößenverteilung. Dazu werden in der später verwendeten Mischeinheit die Trägermaterialien vorgelegt und der Mischvorgang entsprechend dem späteren Vorgehen gestartet. Nach einer definierten Mischzeit werden Proben gezogen und die Partikelgrößenverteilung bestimmt. Bei der Partikelgrößenverteilung sollte die Abweichung vom $d_{50}$-Wert der Ausgangsprobe nicht größer als 5 % betragen. Beträgt z. B. das Ergebnis der Partikelgrößenverteilung vor dem Mischen:

Mittlere Partikelgröße $d_{50}$ = 23,72 $\mu$m

und das Ergebnis der Partikelgrößenverteilung nach dem Mischen:

Mittlere Partikelgröße $d_{50}$ = 22,74 $\mu$m

so ist diese Bedingung erfüllt.

Herkömmliche Verfahren bei denen viel Coatungsmittel schnell zum Trägermaterial gegeben wird, haben den Nachteil, dass es zu Gaseinschlüssen in den Poren kommen kann, d.h. dass die Poren nicht wie gewünscht mit Wirkstoff, sondern mit Gas gefüllt sind

Die vorliegenden Produktsysteme können in vielen Produkten eingesetzt werden. Hierzu gehören insbesondere Kosmetika, Arzneimittel, Deodorants, Nahrungsmittel, Baustoffe, Agrarchemikalien, Klebstoffe, Verpackungen und/oder Lacksysteme.

Nachfolgend wird die vorliegende Erfindung anhand von Beispielen näher erläutert, ohne dass hierdurch eine Beschränkung erfolgen soll.

**Meßmethoden**

**Bestimmung der DBP Zahl:**

Die DBP-Aufnahme (DBP-Zahl), die ein Maß für die Saugfähigkeit eines porösen Trägermaterials ist, wird in Anlehnung an die Norm DIN 53601 wie folgt bestimmt:

12.50 g pulverförmiges oder kugelförmiges Trägermaterial mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3.15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in der Einheit [g/(100g)] ohne Nachkommastellen angegeben und anhand der folgenden Formel berechnet:

$$DBP = \frac{V * D * 100}{E} * \frac{g}{100g} + K$$

mit DBP = DBP-Aufnahme in g/(100g)
V = Verbrauch an DBP in ml
D = Dichte von DBP in g/ml (1,047 g/ml bei 20 °C)
E = Einwaage an Kieselsäure in g
K = Korrekturwert gemäß Feuchtekorrekturtabelle in g/(100g)

Die DBP-Aufnahme ist für die wasserfreie, getrocknete Trägermaterialien definiert. Bei Verwendung von feuchten Trägermaterialien, insbesondere Fällungskieselsäuren oder Silicagelen ist der Korrekturwert K für die Berechnung der DBP-Aufnahme zu berücksichtigen. Dieser Wert kann anhand der folgenden Korrekturtabelle ermittelt werden, z. B. würde ein Wassergehalt des Trägermaterials von 5.8 % einen Zuschlag von 33 g/(100 g) für die DBP-Aufnahme bedeuten. Die Feuchte des Trägermaterials wird gemäß der nachfolgend beschriebenen Methode "Bestimmung der Feuchte bzw. des Trockenverlusts" ermittelt.

**Tabelle 1:** Feuchtekorrekturtabelle für Dibutylphthalataufnahme -wasserfrei-

| | .% Feuchte | | | | |
|---|---|---|---|---|---|
| % Feuchte | .0 | .2 | .4 | .6 | .8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Feuchte bzw. des Trockenverlusts**

Die Feuchte oder auch Trockenverlust (TV) von Trägermaterialien wird in Anlehnung an ISO 787-2 nach 2 stündiger Trocknung bei 105 °C bestimmt. Dieser Trocknungsverlust besteht überwiegend aus Wasserfeuchtigkeit.

*Durchführung*

In ein trockenes Wägeglas mit Schliffdeckel (Durchmesser 8 cm, Höhe 3 cm) werden 10 g des pulverförmigen, kugelförmigen oder granulären Trägermaterials auf 0.1 mg genau eingewogen (Einwaage E). Die Probe wird bei geöffnetem Deckel 2 h bei 105 ± 2 °C in einem Trockenschrank getrocknet. Anschließend wird das Wägeglas verschlossen und in einem Exsikkatorschrank mit Kieselgel als Trocknungsmittel auf Raumtemperatur abgekühlt.

Das Wägeglas / Becherglas wird zur Bestimmung der Auswaage A auf der Präzisionswaage auf 0,1 mg genau ausgewogen. Man bestimmt die Feuchte (TV) in % gemäß

$$TV = (1 - A / E) * 100,$$

wobei A = Auswaage in g und E = Einwaage in g bedeuten.

## Mittlere Partikelgröße $d_{50}$

Die Bestimmung der Partikelverteilung der erfindungsgemäßen Produktsysteme erfolgt nach dem Prinzip der Laserbeugung auf einem Laserdiffraktometer (Fa. Horiba, LA-920).

Zur Bestimmung der Partikelgröße von Pulvern wird eine Dispersion mit einem Gewichtsanteil von ca. 1 Gew.-% $SiO_2$ durch Einrühren des Pulvers in Wasser hergestellt.

Unmittelbar im Anschluss an die Dispergierung wird von einer Teilprobe der Dispersion mit dem Laserdiffraktometer (Horiba LA-920) die Partikelgrößenverteilung bestimmt. Für die Messung ist ein relativer Brechungsindex von 1,09 zu wählen. Alle Messungen erfolgen bei Raumtemperatur. Die Partikelgrößenverteilung sowie die relevanten Größen wie z. B. die mittlere Partikelgröße $d_{50}$ werden vom Gerät automatisch berechnet und grafisch dargestellt. Es sind die Hinweise in der Bedienungsanleitung zu beachten.

## Untersuchung der Oberflächenzusammensetzung mittels XPS

*Meßprinzip*

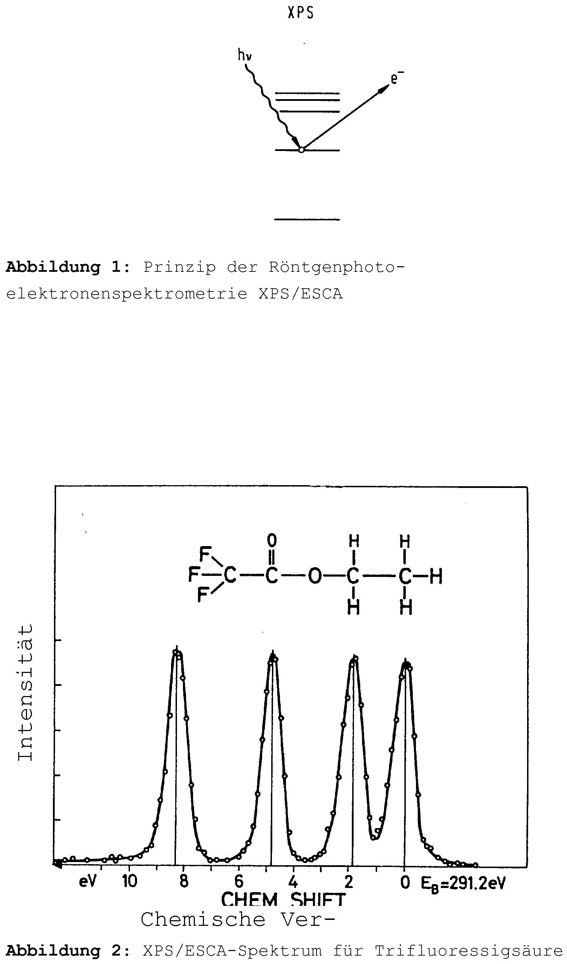

Eine Materialoberfläche wird unter Ultrahochvakuumbedingungen mit weicher Röntgenstrahlung (z.B. MgKα) beschossen. Hierdurch werden sog. Photoelektronen ausgelöst, deren kinetische Energie nach dem Verlassen der Materialoberfläche mit einem Elektronenspektrometer analysiert wird (Abb.1).

Misst man eine metallische Probe, die sich in elektrisch leitendem Kontakt zum Spektrometer befindet, so gilt für die kinetische Energie der ausgelösten Photoelektronen:

$$Ekin. = hν - EB - ΦSp'$$

d.h. die Energie der eingestrahlten Röntgenstrahlung (hv) minus der Bindungsenergie (EB) minus der Austrittsarbeit des Spektrometers (ΦSp'). Im Falle elektrisch nicht leitender Materialien sind zusätzlich Beiträge zu berücksichtigen.

Aus dieser Bilanz zwischen der Anregungsenergie und der gemessenen kinetischen Energie läßt sich somit die Bindungsenergie der Elektronen an den Probenatomen ermitteln. Diese hängt direkt vom chemischen Bindungszustand der Elemente ab. So wird z.B. für metallisches Platin auf einem Träger ein anderer Wert gemessen, als für zwei- oder vierwertiges Platin. Sulfat-Schwefel liefert andere Werte, als Sulfidschwefel oder Sulfan-Schwefel und PMMA liefert andere Sauerstoff- und Kohlenstoffsignale als Polycarbonat, Polyoxymethylen oder Teflon. Ein klassisches Beispiel für ein XPS-Resultat findet sich in Abbildung 2. Es wird ersichtlich, dass selbst verschiedene Bindungszustände des Kohlenstoffs in Trifluoressigsäureethylester anhand der "chemischen Verschiebung" der C-Signale identifiziert werden können. Anhand der sog. "chemischen Verschiebung" der XPS-Signale können somit verschieden gebundene Atome voneinander unterschieden werden, wodurch festgestellt werden kann wie groß der Anteil der Träger- bzw. Wirkstoff- bzw. Schutzstoffatome auf der Oberfläche der erfindungsgemäßen Produktsysteme ist. Auf Grund der Möglichkeit verschieden gebundene Atome voneinander unterschieden zu können wurde für dieses Meßverfahren von K. Siegbahn der Name "ESCA" (Elektronenspektroskopie zur Chemischen Analyse) geprägt, da chemische Informationen geliefert werden.

Anhand von XPS-Spektren ist zu bestimmen, welche Elemente in welcher Konzentration im Bereich der obersten Atomlagen von Materialien vorhanden sind, und anhand der "chemischen Verschiebung" der XPS-Signale, in welchem chemischen Bindungszustand sie vorliegen.

Durch EDV-gestützte Auswerteverfahren ist dieses mit guter Reproduzierbarkeit zu quantifizieren. Die hierbei bestimmten Werte entsprechen üblicherweise einer Angabe in Flächenprozenten.

Es können anhand von Übersichts-Oberflächenanalysen z.B. 0.5 cm$^2$ einer Oberfläche integral erfaßt werden, wobei die Eindringtiefe der Analyse jedoch auf die obersten Atomlagen beschränkt ist. Auf diese Weise werden evtl.

vorhandene Mikroinhomogenitäten herausgemittelt.

Die Messung der aus der Probe emittierten Photoelektronen, wie sie bei der XPS/ESCA-Technik erfolgt, erfasst ausschließlich den Bereich der obersten Atomlagen, da die mittlere freie Weglänge dieser Elektronen nur wenige Atomlagen beträgt. Elektronen, die durch Ionisierungsprozesse in tieferen Schichten freigesetzt werden, können die Oberfläche nicht mehr erreichen und somit die Probe nicht verlassen. Daher ist die XPS-Technik bei Einsatz weicher Röntgen-Anregungsstrahlung und der Messung der dadurch ausgelösten, energiearmen Photoelektronen automatisch oberflächenspezifisch und auf die Oberflächeneigenschaften von Materialien fokussiert.

Ein weiterer Vorteil von XPS besteht darin, dass - außer Wasserstoff und Helium - auch leichte Elemente wie B, C, N, O quantitativ nachzuweisen und deren chemische Bindungszustände direkt beobachtbar sind.

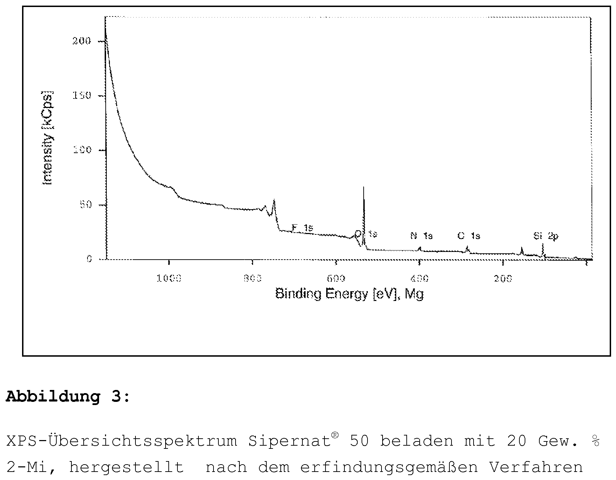

Abbildung 3 zeigt ein XPS-Übersichtsspektrum von Sipernat® 50 beladen mit 20 Gew. % 2-Mi nach dem erfindungsgemäßen Verfahren. Es ist klar erkennbar, welcher Teil der Oberfläche vom $SiO_2$ und welcher von 2-Mi gebildet wird. Durch Untergrundsubtraktion und Einsatz der relativen Empfindlichkeitsfaktoren der Elemente sind gemäß standardisierter Verfahren hieraus quantitative Aussagen zur Oberflächenzusammensetzung zu ermitteln.

*Durchführung der XPS Messungen*

Die XPS Messungen werden an Pulverschüttungen durchgeführt, wobei jeweils 0,5 Quadratzentimeter integral erfasst werden. Um Verunreinigungen der Proben und Messartefakte zu vermeiden werden dazu die Proben in einem Goldbeschichteten reinst-Tantal-Probenbehälter (Alfa, 99.98%, ca. 0,25 mm Dicke, ca. 1,5 bis 2 cm groß) derart vorgelegt, dass es zu keinen Verklumpungen, Anbackungen oder Verdichtungen der Proben kommt. Die Menge der Probe wird so gewählt, dass der Halter weitgehend gefüllt ist bzw. das zumindest ein Fläche von 0,5 Quadratzentimeter vermessen werden kann. Jede Probe wird sodann in eine Vorkammer des XPS-Spektrometers (XPS-Anlage Leybold LHS12 oder Leybold MAX 100) überführt und die Kammer ca. 2 Stunden bei Raumtemperatur auf $10^{-8}$ mbar evakuiert. Danach wird die zu untersuchende Probe in die Hauptkammer des XPS-Spektrometers überführt und das Vakuum auf $4 \times 10^{-10}$ mbar gesteigert um Verunreinigungen und Messartefakte durch eventuelle Kohlenwasserstoffverunreinigungen bzw. Kreuzkontaminationen zu verhindern. Die Reinheit des Vakuums bzw. des Restgases in der Messkammer des XPS-Spektrometers wird kontinuierlich mittels eines Restgasmassenspektrometers (Quadrex 200, Inficon) überwacht.

Die XPS-Messungen wurden nach dem ESCA-Verfahren durchgeführt wobei MgKa Strahlung mit einer Energie von 150W verwendet wurde. Der Analysator der Elektronenenergie (Leybold EA200) wird mit einer Durchgangsenergie von 72e.V. im "fixed analyser transmission mode" betrieben. Als Referenz für die Bindungsenergie Skala des Spektrometers diente das $Au_4f_{7/2}$-Signal des SCAA83-Standards des National Physics Laboratory (NPL, Teddington, GB) bei 84 e.V. welcher vor- und nach der Messung der zu untersuchenden Probe vermessen wird. Die elektrostatische Aufladung der zu untersuchenden Proben wird durch Elektronen mit niedriger Energie aus einer kontrolliert glühenden Elektronenquelle, welche in der Nähe des Probenhalters angebracht ist, kompensiert. Diese Emissionsquelle wiederum ist abgeschirmt und thermisch isoliert, um einen direkter Wärmetransfer zur zu untersuchenden Probe zu verhindern.

Die Auswertung wurde gemäß den allgemeinen Empfehlungen gemäß DIN-Fachbericht Nr. 39 und dem Report des National Physics Laboratory DMAA(A)97, Teddington, GB, Januar 1987 und den bisherigen Erkenntnissen des Arbeitsausschusses "Oberflächen- und Mikrobereichsanalysen" NMP816 (DIN) durchgeführt. Ein DS 100 Datensatz wurde benutzt um die XPS Daten mittels Standardroutinen auszuwerten (mit Subtraktion der Röntgensateliten und des Untergrunds, sowie unter Berücksichtigung der für das verwendete Spektrometer gültige relativen Empfindlichkeitsfaktoren (welche im Datensystem des Spektrometers gespeichert sind) des jeweils angegebenen Elektronenniveaus). Alle Angaben werden in Flächenprozent gemacht.

Die nachfolgenden Beispiele dienen der Veranschaulichung und Erläuterung der vorliegenden Erfindung, schränken diese jedoch in keiner Weise ein.

**Beispiel 1**

*a) Einbringen des Wirkstoffs in einen porösen Träger*

Das Trägermaterial, beispielsweise poröses $SiO_2$ (z.B. Sipernat®2200 Fa. Degussa) wird in einem Glasgefäß vorgelegt. Der flüssige Wirkstoff wird in das Becherglas gegeben (Verhältnis z.B. 30 Gew.-% $SiO_2$ zu 70 Gew.-% flüssiger Wirkstoff). Die agglomerierten Partikel werden in einem Turbula-Mischer ca. 30 min gemischt, bis die Partikel wieder rieselfähig sind. Durch den Energieeintrag und die Adsorptions- bzw. Kapillarkräfte im Inneren der porösen $SiO_2$-Struktur wird der Wirkstoff zum Zentrum des Trägers transportiert. Es ist ebenso möglich, einen nichtflüssigen Wirkstoff in einem entsprechenden Lösungsmittel zu lösen und anschließend wie zuvor beschrieben fortzufahren. Um die Wirkstoffkonzentration einzustellen, kann der Vorgang beliebig oft wiederholt werden, bzw. es können Lösungen mit entsprechenden Konzentrationen hergestellt werden. Zwischen den Schritten muss jedoch ein Trockenschritt durchgeführt werden, um das Lösungsmittel abzutrennen. Genaue Angaben sind unter Versuchsbeschreibung c) angegeben.

*b) Herstellung eines Schutzsystem in dem mit Wirkstoff beladenen Träger*

Das geträgerte Material wird in eine Lösung aus Wachs und Lösemittel eingetaucht. Es ist vorteilhaft, ein Lösemittel zu wählen, welches den Wirkstoff nicht löst. Vorzugsweise ist die Lösung mit Wachs gesättigt, um einen möglichst hohen Eintrag in den porösen Träger zu erzielen. Die geträgerten Partikel werden ca. 2 min in der Lösung leicht gerührt, bevor die Partikel über ein Filter wieder abgetrennt werden. Nach kurzem Abtropfen werden die Partikel im Ofen getrocknet. Dafür wird eine Temperatur unterhalb Schmelztemperatur des Wachses sowie unterhalb des Siedepunktes des Lösungsmittel gewählt. Die Trocknung kann unter den zuvor genannten Bedingungen auch im Vakuum durchgeführt werden. Nachdem die Partikel vollständig getrocknet sind, wird der Vorgang dreimal wiederholt, so dass am Ende vier Schichten Wachs aufgebracht sind.

Es ist ebenso möglich, eine dichte Wachsschicht über eine Wachsschmelze aufzubringen. Dabei sollte der Wirkstoff im Schmelzbereich des Wachses stabil sein. Das geträgerte Material kann beispielsweise bis auf 10 K über die Schmelztemperatur des Wachses erwärmt werden. Gleichzeitig kann das Kapselmaterial geschmolzen werden. Das erwärmte geträgerte Material kann in einem Becherglas vorgelegt und mit der Wachsschmelze, beispielsweise im Verhältnis 60:40 (Gew.-%) beaufschlagt werden. Anschließend wird das Material vorzugsweise ausreichend lange oberhalb der Schmelztemperatur gemischt, bis die Partikel wieder rieselfähig sind. Dann werden die Partikel bei ca. 5°C in Abhängigkeit vom Kapselungsmaterial unter Mischen abgekühlt.

Abschließend kann eine Schicht aus Stearinsäure aufgebracht werden. Dabei wird wie zuvor beschrieben verfahren. Die Stearinsäure wird in Lösemittel, welches die zuvor aufgebrachten Schichten nicht anlöst, gelöst. Die Partikel werden in die gesättigte Lösung 2 min eingetaucht und anschließend getrocknet.

*c) Versuchsbeschreibung*

Eine Verkapselung von NaOH wurde nach der zuvor beschriebenen allgemeinen Herstellungsvorschrift mit folgenden Versuchsschritten erzielt:

1. 150ml einer 10 Gew.-% Lösung von festem NaOH in Ethanol wurde auf 50 g $SiO_2$ (Sipernat® 2200) aufgetragen.

2. Die beladenen Partikel wurden bei 80°C im Trockenschrank 12 Stunden getrocknet.

3.-6. Die Punkte 1 und 2 wurden noch zwei Mal wiederholt, um die Gesamtbeladung der Aktivsubstanz zu erhöhen.

7. Die nach Schritt 6 erhaltenen Partikel wurden in eine 25-prozentigen Lösung von Wachs (Sasol 5403) in n-Hexan zwei Minuten lang getaucht.

8. Anschließend erfolgte die Trocknung bei einer Temperatur von 50°C und 500 mbar Vakuum im Trockenschrank.

9.-12. Die Punkte 7 und 8 wurden noch zwei Mal wiederholt.

13. Als nächstes wurden die Partikel auf 80°C erwärmt, mit einer Stearinsäureschmelze vermischt (35 g Stearinsäureschmelze auf 100 g Partikel) und anschließend erstarrt, um ein fließfähiges Produkt herstellen zu können.

14. Zum Schluss wurden die Partikel in eine Lösung aus 10 Gew.-% Stearinsäure in Ethanol für zwei Minuten getaucht.

15. Die Trocknung wurde bei 50°C und 500 mbar Vakuum im Trockenschrank durchgeführt.

Das Produkt wurde in Glasflaschen verpackt.

Verwendete Substanzen:

| | | |
|---|---|---|
| 1. | NaOH (fest) | Fa. Merck CAS-Nr.: 1310-73-2 |

(fortgesetzt)

| 2. | n-Hexan (technisch) | Fa. Merck CAS-Nr.: 110-54-3 |
| 3. | Ethanol (technisch) | Fa. Merck CAS-Nr.: 64-17-5 |
| 4. | Stearinsäure | Fa. Merck CAS-Nr.: 57-11-4 |
| 5. | Sasol 5403 | Fa. Sasol CAS-Nr.: 8002-74-2 |
| 6. | Trägermaterial Sipernat® 2200 | Fa. Degussa |

**Beispiel** 2

Um die Stabilität des Produkts aus Beispiel 1 zu untersuchen, wurde das Produkt in einem 1L-Glaslaborreaktor mit Mantel in Wasser bei 23°C bzw. 40°C mit einem Laborpropellerrührer (200 Umdrehungen/min) gerührt. Nach 90 Minuten trat keine Änderung des pH-Wertes ein. Wird die Temperatur jedoch über 54 °C erhöht - das Schutzsystem ist so ausgebildet, dass es bei 54°C geöffnet wird - so wird der Wirkstoff freigesetzt. Abbildung 2 zeigt die Konzentration der Aktivsubstanz in Wasser in Abhängigkeit von der Zeit und der Wassertemperatur. Der Übersichtlichkeit halber wurde die Kurve für den Freisetzungsversuch bei 40°C nicht dargestellt. Die Ergebnisse der Freisetzungsversuche zeigen eindeutig die Leistungsfähigkeit der erfindungsgemäßen Formulierungen. Durch die extrem gute Löslichkeit von Natronlauge in Wasser würden bereits kleine Öffnungen bzw. Schadstellen im Schutzsystem dafür sorgen, dass die Natronlauge freigesetzt wird. Dies ist bei den erfindungsgemäßen Produktsystemen nicht der Fall wie die Lagerversuche bei 23 und 40 °C zeigen. Wird die Temperatur jedoch auf 60°C erhöht, so wird die Natronlauge freigesetzt. Die Produktsysteme nach Beispiel 1 zeigen somit eine gute Lagerstabilität, gute mechanische Stabilität (wurde durch 90 minütiges Rühren simuliert) und der Wirkstoff kann gezielt, durch äußere Einflüsse steuerbar, freigesetzt werden.

**Beispiel 3**

Als Mustersubstanz für Beispiel 3 wurde 2-Methylimidazol (CAS Nr. 693-98-1) (2-Mi) ausgewählt. 2-Mi ist eine heterocyclische Verbindung mit zwei Stickstoffatomen und zwei Doppelbindungen mit einem Molekülformel $C_4H_6N_2$. Diese Substanz wird als Reaktionsinitiator für Epoxydharz-Systemen (Dyhard®) verwendet. Die Herausforderung bestand darin, eine Verkapselungsformulierung zu entwickeln, in der der Initiator vor unkontrollierter Reaktion geschützt ist, wobei Methylimidazol als eine sehr reaktionsfreudige Substanz bekannt ist. Die Freisetzung soll bei Temperaturen über 80 °C erfolgen, bei der die Epoxydharzaushärtung gestartet wird. Unter dieser Temperatur darf keine Reaktion stattfinden und die reaktive Substanz darf nicht aus den verkapselten Partikeln heraustreten. Es ist bekannt, dass 2-Mi sehr gut in einer großen Vielzahl organischer Lösungsmittel löslich ist, einschließlich Wasser.

Als Feststoffträger wurde Sipernat® 50 der Firma Evonik Degussa GmbH verwendet. Die Verkapselung kann prinzipiell nach 2 verschiedenen Varianten durchgeführt werden:

In Variante a) wird das Trägermaterial in einem Mischer vorgelegt und auf die Schmelztemperatur des Wirkstoffes erhitzt. Anschließend erfolgt die Zugabe des Wirkstoffes. Das 2-Mi wird in der Mischeinheit aufgeschmolzen und durch den Mischvorgang homogen in das Trägermaterial eingetragen. In Variante b) wird das 2-Mi aus der Lösung aufgetragen werden. Hierzu wird ebenfalls im Kneter das Trägermaterial vorgelegt, jedoch wird der Kneter nicht erhitzt. Das 2-Mi wird in einem entsprechenden Lösungsmittel - zur Auswahl des entsprechenden Lösungsmittels siehe Erläuterungen in der Beschreibung - gelöst und anschließend der Mischeinheit mit dem Trägermaterial zugeführt.

Bei beiden Verfahrensvarianten wird der Wirkstoff durch Düsen auf das Trägermaterial aufgebracht.

Es wurde beobachtet, dass durch die Auftragung aus der Schmelze eine höhere Beladung der Partikel erzielt werden kann.

Den allgemeinen - zuvor beschriebenen - Grundsätzen folgend wurde eine Verkapselung von 2-Mi nach Variante a) wie folgt durchgeführt:

1. Es werden 50 g Sipernat® 50 in einem Kneter vorgelegt und unter Mischen im Apparat auf 170°C erhitzt und konstant weiter gerührt.

2. In einem Becherglas werden 80 g 2-Mi auf 150°C mit einer Heizplatte unter Rühren aufgeschmolzen.

3. Unter konstantem Rühren wird das geschmolzene 2-Mi der Vorlage im Kneter langsam durch auftropfen zudosiert. Dabei werden 60 g 2-Mi in 30 min zudosiert (auftropfen) .

4. Die Mischung wird bei 170°C 60 min geknetet. Es entsteht ein rieselfähiges Zwischenprodukt.

5. Die Temperatur im Kneter wird nun auf 100°C abgesenkt.

6. In einem Becherglas werden 140g Wachs C80 bei 90°C aufgeschmolzen.

7. Der Wachs wird in 60 min auf die Mischung aufgetropft.

8. Die Mischung wird bei 100°C 60 min geknetet. Es entsteht ein rieselfähiges Zwischenprodukt.

9. Die Temperatur im Kneter wird nun auf 80°C abgesenkt.

10. In einem Becherglas werden 70g Stearinsäure bei 70°C aufgeschmolzen.

11. Die Stearinsäure wird in 30 min auf die Mischung aufgetropft. Es entsteht eine zähflüssige Masse.

12. In einem Trockenschrank werden 50g Sipernat® 50 auf 80°C erwärmt.

13. Das Sipernat® aus 12. wird der Mischung aus Schritt 11 zudosiert (löffelweise Zugabe).

14. Die Mischung wird bei 80°C 60 min geknetet. Es entsteht ein rieselfähiges Produkt.

15. Der Kneter wird auf Raumtemperatur abgekühlt und das fertige Produkt entnommen und in einer Glasflasche verpackt.

Verwendete Substanzen:

| | | |
|---|---|---|
| 1. | 2-Methylimidazol | Fa. Merck CAS-Nr.: 693-98-1 |
| 2. | Wachs | Fa. Sasol Bez. C80 |
| 3. | Stearinsäure | Fa. Merck CAS-Nr.: 57-11-4 |
| 4. | Trägermaterial Sipernat® 50 | Fa. Evonik |

Verwendete Geräte:

| | |
|---|---|
| 1. Kneter | Hersteller IKA Bez. Messkneter H60 |
| 2. Magnetrührer/Heizplatte | Hersteller IKA Bez. RCT basic |

Die Auswahl des Schutzmaterials hängt vorrangig von den Freisetzungsbedingungen ab. In obigem Fall des verkapselten 2-Mi's sollte das Schutzmaterial einen Schmelzpunkt von über 80 °C besitzen, da die Freisetzung in diesem Temperaturbereich erfolgen soll.

**Beispiel 4**

Herstellung von Produktsystemen analog Beispiel 3) jedoch mit Vorimprägnierung des Trägermaterials

In Abwandlung von Beispiel 3 wurde zur Beeinflussung der Oberflächeneigenschaften des Sipernat® 50 vor dem Wirkstoffauftrag eine Behandlung des Sipernat® 50 mit dem Tensid Tego Twin 4000 durchgeführt. Dazu wurde in einem Mischer das Trägermaterial vorgelegt und das Tensid Tego Twin 4000 bevorzugt in einem Gew.-Verhältnis von Trägermaterial zu Tensid 5:1 aufgetragen. Anschließend wird wie in Schritten 1 bis 15 von Beispiel 3 beschrieben das Schutzsystem erzeugt.

**Beispiel 5**

Herstellung eines Produktsystems entsprechend Beispiel 3) jedoch mit vorheriger Evakuierung des Trägermaterials

In Abänderung von Beispiel 3 wurde Sipernat® 50 der Firma Evonik Degussa GmbH in einem Mischer vorgelegt und auf die Schmelztemperatur des Wirkstoffes erhitzt. Anschließend erfolgt die Zugabe des 2 Mi in den Mischer. Die Mischeinheit wurde auf 200 mbar abs evakuiert, das 2-Mi wird in der Mischeinheit aufgeschmolzen und durch den Mischvorgang homogen in das Trägermaterial eingetragen. Die weiteren Schritte erfolgten wie in Beispiel 3 beschrieben.

**Beispiel 6**

Untersucht wurde die Struktur der Produktsysteme aus Beispiel 3)

Zur Charakterisierung der Partikelstruktur wurden XPS-Oberflächenanalysen an einer verkapselten Probe (nach Beispiel 3) und an einer unverkapselten Probe des Wirkstoffs 2-Methylimidazol durchgeführt. Die Messung erfolgte an einer Pulverschüttung der Probe über eine Fläche von 0,5 cm$^2$. Die Photoelektronenspektroskopie XPS liefert Angaben über die elementare Belegung der Partikeloberfläche. In Tabelle 2 sind die Ergebnisse der Analyse dargestellt. Die Angabe erfolgt in Atomprozent. Unter der Annahme, dass die Menge an adsorbiertem Kohlenstoff konstant 7 % (Kohlenstoffbeladung von 7 % wurde zuvor bei Messung des reinen Trägermaterials Sipernat® 50 ermittelt (siehe Tabelle 2 unten)) beträgt, wird aus den angegebenen Werten auf die molekularen Anteile zurück geschlossen.
In Abbildung 3 ist ein XPS-Übersichtsspektrum von Sipernat® 50 beladen mit 20 Gew. %, d.h. dem Produkt nach Stufe 4 des Verfahrens aus Beispiel 3 wiedergegeben. Es ist klar erkennbar, insbesondere an den N-, O-, und Si-Peaks, dass das 2-Mi nahezu vollständig in den Poren des Trägermaterials aufgenommen wurde und nur sehr geringe Mengen an der Oberfläche verblieben sind.
Die Auswertung der XPS-Spektren des Endprodukts nach Beispiel 3 ist in nachfolgender Tabelle 2 wiedergegeben.

| SiO$_2$ | C | N | F | Molekulare Anteile | | |
|---|---|---|---|---|---|---|
| Reines Sipernat® 50 vor Beladung | | | | | | |
| 92,0 % | 6,9 % | – | 1,0 % | SiO$_2$: | | 92,0 % |
| Produktsystem nach Beispiel 3 | | | | | | |
| 16 % | 78,9 % | 2,4 % | 2,8 % | SiO$_2$: 16,0 %<br>2-Mi: 7,3 %<br>St/Sasol: 64,6 % | | |

**Tabelle 2:** Ergebnisse des XPS Messungen

Die Ergebnisse aus obiger Tabelle 2 zeigen, dass 16 % der Partikeloberfläche im Produktsystem nach Beispiel 3 von SiO$_2$ gebildet wird. Das bestätigt, dass sich das Schutzsystem weitgehend in den Poren des Trägermaterials befindet und die Porenwände aus hartem SiO$_2$ bis an die Oberfläche des Produktsystems reichen und dort einen mechanischen Abriebschutz bewirken. Eine vollständige Schutzhülle um das Trägermaterial - wie bei einem "Core/Shell" System - ist eindeutig nicht vorhanden. Ferner zeigen die Ergebnisse, dass, obwohl keine Inaktivierung des Wirkstoffes oder separate Waschschritte mit den erfindungsgemäßen Produktsystemen nach Beispiel 3 durchgeführt wurden, nur 7,3% 2-Mi an der Partikeloberfläche vorhanden sind und somit der größte Teil des 2-Mi in die Poren des Trägers aufgesogen wurde.

**Beispiel 7:**

In diesem Beispiel wurde die Lagerstabilität von Harzen enthaltend einen Härter und 2-Mi als Beschleuniger untersucht. Dazu wurde einmal ein erfindungsgemäß verkapseltes 2-Mi (mit 20Gew.% Wirkstoffbeladung) ein einmal reines 2-Mi in eine Mischung aus einem Harz und einem Härter eingearbeitet und die Mischung rheologisch untersucht um die Aushärtung des Systems zu messen. Dabei gilt, mit steigender Viskosität ist die Aushärtung vorangeschritten.

**Tabelle 3:** Ergebnisse der Lagerungsversuche von Harzen mit 2-Mi

| Epiko-te 828 [g] | Starter Dyhard 100S [mg] | Beschleuniger 2-Mi | Menge[1) Beschleuniger-formulierung [mg] | Bemer-kung | Viskosität in Pa.s (gemessen bei 25 °C) | | | | | | |
|---|---|---|---|---|---|---|---|---|---|---|---|
| | | | | | 0 Tage | 1 Tag | 2 Tage | 3 Tage | 4 Tage | 5 Tage | 6 Tage |
| 5 | 86 | Verkapselt in erfindungsgemäßen Pro-duktsystem mit 20 Gew. % 2-Mi | 70 | Lage-rung bei T=20°C | 20 | – | – | 30 | Wochen-ende | Wochen-ende | 55 |
| 5 | 86 | Reines 2-Mi | 14 | Lage-rung bei T=20°C | 19 | 49 | 119 | – | – | fest | – |

| Epiko-te 828 [g] | Starter Dyhard 100S [mg] | Beschleuniger 2-Mi | Menge[1) Beschleuniger-formulierung [mg] | Bemer-kung | Fortsetzung Viskosität in Pa.s (gemessen bei 25 °C) | | | | | | |
|---|---|---|---|---|---|---|---|---|---|---|---|
| | | | | | 7 Tage | 8 Tage | 9 Tage | 10 Tage | 11 Tage | 12 Tage | 13 Tage |
| 5 | 86 | Verkapselt in erfindungsgemäßen Pro-duktsystem mit 20 Gew. % 2-Mi | 70 | Lage-rung bei T=20°C | 73 | 109 | 190 | 323 | Wochen-ende | Wochen-ende | . |
| 5 | 86 | Reines 2-Mi | 14 | Lage-rung bei T=20°C | – | – | – | – | – | – | – |

EP 2 254 690 B1

| Epiko-te 828 [g] | Starter Dyhard 100S [mg] | Beschleuniger 2-Mi | Menge[1] Beschleuniger-formulierung [mg] | Bemer-kung | Fortsetzung Viskosität in Pa.s (gemessen bei 25 °C) | | | | | | |
|---|---|---|---|---|---|---|---|---|---|---|---|
| | | | | | 14 Tage | 15 Tage | 16 Tage | 17 Tage | 18 Tage | 19 Tage | 20 Tage |
| 5 | 86 | Verkapselt in er-findungsge-mäßen Pro-duktsystem mit 20 Gew. % 2-Mi | 70 | Lage-rung bei T=20°C | 410 | – | – | 560 | Wochen-ende | Wochen-ende | 740 |
| 5 | 86 | Reines 2-Mi | 14 | Lage-rung bei T=20°C | – | – | – | – | – | – | – |

[1] Da die erfindungsgemäßen Produktsysteme mit 20 Gew% 2-Mi beladen waren und die absolute Menge an 2-Mi in beiden Versuchreihen gleich sein sollte, wurde für die Versuche die 5 fache Menge an erfindungsgemäßem Produktsystem im vergleich zu reinem 2-Mi eingesetzt.

Wie aus obiger Tabelle 3 entnommen werden kann ist das Harz enthaltend reines 2-Mi bereits nach 5 Tagen vollständig ausgehärtet und nicht mehr verarbeitbar. Unter Verwendung der erfindungsgemäßen Produktsysteme ist die Viskosität jedoch selbst nach 8 Tagen noch besser als bei Verwendung von reinem 2-Mi. Selbst nach 3 Wochen Lagerzeit ist das Harz enthaltend die erfindungsgemäßen Produktsysteme noch flüssig und kann noch verarbeitet werden. Somit konnte die Verarbeitungszeit mehr als vervierfacht werden. Ein weiterer Vorteil ist, dass nach 3 Wochen und nach Verarbeitung des Harzes, durch gezielte Aktivierung das Schutzsystem zerstört werden kann und somit das 2-Mi schnell freigesetzt werden kann.

**Patentansprüche**

1. Produktsystem umfassend

   - mindestens einen porösen Träger, ausgewählt aus der Gruppe Fällungskieselsäuren oder Kieselgele in Form von Pulvern, Granulaten oder Mikrogranulaten mit einem mittleren Durchmesser $d_{50}$ größer gleich 3 $\mu$m,
   - mindestens einen Wirkstoff, der in den porösen Träger eingebracht ist, und
   - mindestens einen Schutzstoff von dem zumindest ein Teil der gesamten im Produktsystem vorhandenen Menge in den Poren des Trägermaterials eingebracht ist,
   **dadurch gekennzeichnet, dass**, nachgewiesen durch eine Untersuchung der äußersten Atomlage des Produktsystems mittels XPS, zumindest ein Teil der äußersten Oberfläche des Produktsystems durch das Trägermaterial ausgebildet wird und
   mindestens 10 % der Oberfläche des Produktsystems nachgewiesen durch eine Untersuchung der äußersten Atomlage des Produktsystems mittels XPS, durch das Trägermaterial und nicht durch Wirkstoff/Wirkstoffen und/oder Schutzstoff/Schutzstoffen gebildet wird.

2. Produktsystem nach Anspruch 1, **dadurch gekennzeichnet, dass** der Schutzstoff mindestens eine Verbindung umfasst, die in einem Lösungsmittel löslich ist, in welchem sich der Wirkstoff nicht löslich ist.

3. Produktsystem nach einem der vorherigen Ansprüche, **dadurch gekennzeichnet, dass** der Wirkstoff in einem polaren Lösungsmittel löslich ist und der Schutzstoff in Wasser unlöslich und/oder in einem unpolaren Lösungsmittel löslich oder, dass der Wirkstoff in einem unpolaren Lösungsmittel löslich ist und der Schutzstoff in diesem unpolaren Lösungsmittel unlöslich und/oder in einem polaren Lösungsmittel und/oder Wasser löslich ist.

4. Produktsystem gemäß Anspruch 3 , **dadurch gekennzeichnet, dass** das unpolare Lösungsmittel ein aromatischer Kohlenwasserstoff, ein Alkan oder ein Cycloalkan ist.

5. Produktsystem gemäß einem der vorhergehenden Ansprüche, **dadurch gekennzeichnet, dass** das Gewichtsverhältnis von Schutzsystem zu Wirkstoff im Bereich von 10:1 bis 1:10 liegt.

6. Produktsystem nach einem der vorhergehenden Ansprüche, **dadurch gekennzeichnet, dass** die Beladung des porösen Trägers mit Wirkstoff 1 Gew. % bis 9 Gew. % oder mindestens 10 Gew. % bis 90 Gew. %, bezogen auf die DBP-Absorption des porösen Trägers, beträgt.

7. Produktsystem nach einem der vorhergehenden Ansprüche, **dadurch gekennzeichnet, dass** die Beladung des porösen Trägers mit Schutzsystem mindestens 10 Gew. %, bezogen auf die DBP-Absorption des porösen Trägers, beträgt.

8. Produktsystem nach Anspruch 6 oder 7, **dadurch gekennzeichnet, dass** der unbeladene anorganische und / oder organische poröse Träger eine DBP-Absorption von mindestens 180 g/100 g aufweist.

9. Produktsystem nach einem der vorhergehenden Ansprüche, **dadurch gekennzeichnet, dass** das Produktsystem partikelförmig ist.

10. Produktsystem gemäß Anspruch 9, **dadurch gekennzeichnet, dass** die Partikel eine mittlere Partikelgröße $d_{50}$ im Bereich von 5 $\mu$m bis 1000 $\mu$m aufweisen.

11. Verfahren zur Herstellung eines Produktsystems nach einem der vorhergehenden Ansprüche, **dadurch gekennzeichnet, dass** man einen Wirkstoff in einen porösen Träger einbringt und ein Schutzsystem erzeugt und

die folgenden Schritte umfasst:

a) Vorlegen zumindest eines Trägermaterials in einer Feststoffmischeinheit
b) Optional Evakuieren der Feststoffmischeinheit
c) Optionales Vorimprägnieren des Trägermaterials mit zumindest einem Schutzstoff bis maximal 50 Gew. % des DBP-Absorptioswertes erreicht sind
d) Zugabe zumindest eines Wirkstoffes in die Feststoffmischeinheit
e) Imprägnieren des Trägers mit Wirkstoff
f) Inhibieren des an der äußeren Partikeloberfläche des Trägermaterials anhaftenden Wirkstoffes und/oder Waschen und/oder Trocknen
g) Zugabe zumindest eines Schutzstoffes
h) Imprägnieren des Trägers mit zumindest einem Schutzstoff
i) Waschen und/oder Trocknen
j) reaktives Inhibieren des an der äußeren Partikeloberfläche des Trägermaterials anhaftenden Wirkstoffes und/oder Waschen und/oder Trocknen, wobei das Trägermaterial Fällungskieselsäure oder Kieselgel in Form von Pulvern, Granulaten oder Mikrogranulaten mit einem mittleren Durchmesser $d_{50}$ größer gleich 3 $\mu$m ist.

12. Verfahren nach Anspruch 11, **dadurch gekennzeichnet, dass** die Stufen b) bis e) und/oder g) bis h) mehrmals durchgeführt werden, wobei bei Wiederholung der Schritte d) und e) und/ oder g) und h) jeweils gleiche oder unterschiedliche Wirk- bzw. Schutzstoffe verwendet werden können

13. Verfahren nach einem der Ansprüche 11 oder 12 , **dadurch gekennzeichnet, dass** das Trägermaterial und der Wirkstoff/die Wirkstoffe gemischt werden bevor sie in die Feststoffmischeinheit gefüllt werden.

14. Verfahren nach einem der Ansprüche 11 bis 13, **dadurch gekennzeichnet, dass** eine Vorbehandlung des Trägermaterials mit Tensiden oder Silanen erfolgt bevor der Wirkstoff oder/oder Schutzsystem zugegeben wird.

15. Verfahren nach Anspruch 14, **dadurch gekennzeichnet, dass** in Stufe c) ein Gemisch aus zumindest einem Wirkstoff und zumindest einem Schutzstoff zugegeben wird.

16. Verfahren nach einem der Ansprüche 11 bis 15, **dadurch gekennzeichnet, dass** die Zugegebene Menge an Schutzstoff/Schutzstoffe in Schritt g) derart geregelt wird, dass die Gesamtmenge an Wirkstoff/Wirkstoffen und Schutzstoff/Schutzstoffen die bei der Herstellung der Produktsysteme zugegeben wird 50 Gew. % bis 100 Gew. % des DBP-Absorptionswertes des Trägermaterials entsprechen.

17. Verfahren nach einem der Ansprüche 11 bis 16, **dadurch gekennzeichnet, dass** die Zugegebene Menge an Schutzstoff/Schutzstoffe in Schritt g) derart geregelt wird, dass die Gesamtmenge an Wirkstoff/Wirkstoffen und Schutzstoff/Schutzstoffen die bei der Herstellung der Produktsysteme zugegeben wird, größer ist als das Gesamtporenvolumen des Trägermaterials und dass der Überschuss an Schutzstoff/Schutzstoffen durch Zugabe von Trägermaterial und/oder mit Wirkstoff/Wirkstoffen beladenem Trägermaterial absorbiert wird.

18. Verfahren nach einem der Ansprüche 11 bis 17 **dadurch gekennzeichnet, dass** die Mischintensität und die Dosierung so aufeinander abgestimmt sind, dass die Riselfähigkeit am Ende des Auftragvorgangs gewährleistet ist.

19. Verfahren nach einem der Ansprüche 11 bis 18, **dadurch gekennzeichnet, dass** die Rührorgane so gewählt werden, dass durch Scherbeanspruchung kein Abrieb stattfindet.

20. Verwendung eines Produktsystems nach einem der Ansprüche 1 bis 10 zur Herstellung von Lebensmitteln, Futtermitteln, Arzneimitteln, Erzeugnissen für die Land und Forstwirtschaft, Kosmetika, Komponenten für Beschichtungs- und Klebeformulierungen oder Komponenten für Sportausrüstung und Sportbekleidung.

**Claims**

1. Product system comprising

- at least one porous carrier selected from the group consisting of precipitated silicas or silica gels in the form of powders, granules or microgranules having an average diameter $d_{50}$ greater than or equal to 3 $\mu$m,

- at least one active ingredient which is introduced into the porous carrier, and
- at least one protective substance of which at least part of the total amount present in the product system is introduced into the pores of the carrier material,

**characterized in that**, detected by investigating the outermost atomic layer of the product system by means of XPS, at least part of the outermost surface of the product system is formed by the carrier material and at least 10% of the surface of the product system, detected by investigating the outermost atomic layer of the product system by means of XPS, is formed by the carrier material and not formed by active ingredient/active ingredients and/or protective substance/protective substances.

2. Product system according to Claim 1, **characterized in that** the protective substance comprises at least one compound which is soluble in a solvent in which the active ingredient is not soluble.

3. Product system according to either of the preceding claims, **characterized in that** the active ingredient is soluble in a polar solvent and the protective substance is insoluble in water and/or soluble in a nonpolar solvent or **in that** the active ingredient is soluble in a nonpolar solvent and the protective substance is insoluble in this nonpolar solvent and/or soluble in a polar solvent and/or water.

4. Product system according to Claim 3, **characterized in that** the nonpolar solvent is an aromatic hydrocarbon, an alkane or a cycloalkane.

5. Product system according to any of the preceding claims, **characterized in that** the weight ratio of protection system to active ingredient is in the range from 10:1 to 1:10.

6. Product system according to any of the preceding claims, **characterized in that** the loading of the porous carrier with active ingredient is 1% by weight to 9% by weight or at least 10% by weight to 90% by weight, based on the DBP absorption of the porous carrier.

7. Product system according to any of the preceding claims, **characterized in that** the loading of the porous carrier with protection system is at least 10% by weight, based on the DBP absorption of the porous carrier.

8. Product system according to Claim 6 or 7, **characterized in that** the unladen inorganic and/or organic porous carrier has a DBP absorption of at least 180 g/100 g.

9. Product system according to any of the preceding claims, **characterized in that** the product system is particulate.

10. Product system according to Claim 9, **characterized in that** the particles have an average particle size $d_{50}$ in the range from 5 $\mu$m to 1000 $\mu$m.

11. Method for producing a product system according to any of the preceding claims, **characterized in that** an active ingredient is introduced into a porous carrier and a protection system is produced and comprising the following steps:

a) introduction as initial charge of at least one carrier material in a solids mixing unit
b) optional evacuation of the solids mixing unit
c) optional preimpregnation of the carrier material with at least one protective substance until at most 50% by weight of the DBP absorption value is achieved
d) addition of at least one active ingredient to the solids mixing unit
e) impregnation of the carrier with active ingredient
f) inhibition of the active ingredient adhering to the outer particle surface of the carrier material and/or washing and/or drying
g) addition of at least one protective substance
h) impregnation of the carrier with at least one protective substance
i) washing and/or drying
j) reactive inhibition of the active ingredient adhering to the outer particle surface of the carrier material and/or washing and/or drying, the carrier material being precipitated silica or silica gel in the form of powders, granules or microgranules having an average diameter $d_{50}$ greater than or equal to 3 $\mu$m.

12. Method according to Claim 11, **characterized in that** stages b) to e) and/or g) to h) are carried out several times, where, in the case of repetition of steps d) and e) and/or g) and h), in each case identical or different active ingredients and/or protective substances can be used.

13. Method according to either of Claims 11 and 12, **characterized in that** the carrier material and the active ingredient/active ingredients are mixed before they are introduced into the solids mixing unit.

14. Method according to any of Claims 11 to 13, **characterized in that** a pretreatment of the carrier material with surfactants or silanes takes place before the active ingredient or/or protection system is added.

15. Method according to Claim 14, **characterized in that**, in stage c), a mixture of at least one active ingredient and at least one protective substance is added.

16. Method according to any of Claims 11 to 15, **characterized in that** the added amount of protective substance/protective substances in step g) is regulated such that the total amount of active ingredient/active ingredients and protective substance/protective substances which is added during the production of the product systems corresponds to 50% by weight to 100% by weight of the DBP absorption value of the carrier material.

17. Method according to any of Claims 11 to 16, **characterized in that** the added amount of protective substance/protective substances in step g) is regulated such that the total amount of active ingredient/active ingredients and protective substance/protective substances which is added during the production of the product systems is greater than the total pore volume of the carrier material and **in that** the excess of protective substance/protective substances is absorbed by adding carrier material and/or carrier material laden with active ingredient/active ingredients.

18. Method according to any of Claims 11 to 17, **characterized in that** the mixing intensity and the metering are matched to one another such that the pourability at the end of the application process is ensured.

19. Method according to any of Claims 11 to 18, **characterized in that** the stirring elements are selected such that no abrasion takes place as a result of shear stress.

20. Use of a product system according to any of Claims 1 to 10 for producing foods, feeds, medicaments, products for agriculture and forestry, cosmetics, components for coating formulations and adhesive formulations or components for sports equipment and sports clothing.

**Revendications**

1. Système de produits comprenant :

   - au moins un support poreux, choisi dans le groupe des silices précipitées ou des gels de silice sous la forme de poudres, granulats ou microgranulats ayant un diamètre moyen $d_{50}$ supérieur ou égal à 3 $\mu$m,
   - au moins une substance active, qui est introduite dans le support poreux, et
   - au moins une substance protectrice dont au moins une partie de la quantité présente au total dans le système de produits est introduite dans les pores du matériau support,
   **caractérisé en ce que**, détecté par une analyse de la couche atomique extérieure du système de produits par XPS, au moins une partie de la surface extérieure du système de produits est formée par le matériau support, et au moins 10 % de la surface du système de produits, détecté par une analyse de la couche atomique extérieure du système de produits par XPS, est formée par le matériau support et non par une substance active/des substances actives et/ou une substance protectrice/des substances protectrices.

2. Système de produits selon la revendication 1, **caractérisé en ce que** la substance protectrice comprend au moins un composé qui est soluble dans un solvant, dans lequel la substance active n'est pas soluble.

3. Système de produits selon l'une quelconque des revendications précédentes, **caractérisé en ce que** la substance active est soluble dans un solvant polaire et la substance protectrice est insoluble dans l'eau et/ou est soluble dans un solvant apolaire, ou **en ce que** la substance active est soluble dans un solvant apolaire et la substance protectrice est insoluble dans ce solvant apolaire et/ou est soluble dans un solvant polaire et/ou dans l'eau.

4. Système de produits selon la revendication 3, **caractérisé en ce que** le solvant apolaire est un hydrocarbure aromatique, un alcane ou un cycloalcane.

5. Système de produits selon l'une quelconque des revendications précédentes, **caractérisé en ce que** le rapport en poids entre le système protecteur et la substance active se situe dans la plage allant de 10:1 à 1:10.

6. Système de produits selon l'une quelconque des revendications précédentes, **caractérisé en ce que** le chargement du support poreux avec une substance active est de 1 % en poids à 9 % en poids ou d'au moins 10 % en poids à 90 % en poids, par rapport à l'absorption DBP du support poreux.

7. Système de produits selon l'une quelconque des revendications précédentes, **caractérisé en ce que** le chargement du support poreux avec un système protecteur est d'au moins 10 % en poids, par rapport à l'absorption DBP du support poreux.

8. Système de produits selon la revendication 6 ou 7, **caractérisé en ce que** le support poreux inorganique et/ou organique non chargé présente une absorption DBP d'au moins 180 g/100 g.

9. Système de produits selon l'une quelconque des revendications précédentes, **caractérisé en ce que** le système de produits est particulaire.

10. Système de produits selon la revendication 9, **caractérisé en ce que** les particules présentent une taille de particule moyenne $d_{50}$ dans la plage allant de 5 $\mu$m à 1 000 $\mu$m.

11. Procédé de fabrication d'un système de produits selon l'une quelconque des revendications précédentes, **caractérisé en ce qu'**une substance active est introduite dans un support poreux et un système protecteur est généré, et comprenant les étapes suivantes :

   a) la disposition d'au moins un matériau support dans une unité de mélange de solides,
   b) éventuellement l'évacuation de l'unité de mélange de solides,
   c) éventuellement la préimprégnation du matériau support avec au moins une substance protectrice jusqu'à atteindre au plus 50 % en poids de la valeur d'absorption DBP,
   d) l'ajout d'au moins une substance active dans l'unité de mélange de solides,
   e) l'imprégnation du support avec de la substance active,
   f) l'inhibition de la substance active adhérant sur la surface de particule extérieure du matériau support et/ou le lavage et/ou le séchage,
   g) l'ajout d'au moins une substance protectrice,
   h) l'imprégnation du support avec au moins une substance protectrice,
   i) le lavage et/ou le séchage,
   j) l'inhibition réactive de la substance active adhérant sur la surface de particule extérieure du matériau support et/ou le lavage et/ou le séchage, le matériau support étant de la silice précipitée ou du gel de silice sous la forme de poudres, granulats ou microgranulats ayant un diamètre moyen $d_{50}$ supérieur ou égal à 3 $\mu$m.

12. Procédé selon la revendication 11, **caractérisé en ce que** les étapes b) à e) et/ou g) à h) sont réalisées à plusieurs reprises, des substances actives ou protectrices identiques ou différentes pouvant être utilisées à chaque fois lors de la répétition des étapes d) et e) et/ou g) et h).

13. Procédé selon l'une quelconque des revendications 11 ou 12, **caractérisé en ce que** le matériau support et la substance active/les substances actives sont mélangés avant d'être placés dans l'unité de mélange de solides.

14. Procédé selon l'une quelconque des revendications 11 à 13, **caractérisé en ce qu'**un prétraitement du matériau support avec des tensioactifs ou des silanes a lieu avant l'ajout de la substance active ou/ou du système protecteur.

15. Procédé selon la revendication 14, **caractérisé en ce qu'**un mélange d'au moins une substance active et d'au moins une substance protectrice est ajouté à l'étape c).

16. Procédé selon l'une quelconque des revendications 11 à 15, **caractérisé en ce que** la quantité ajoutée de substance protectrice/substances protectrices à l'étape g) est ajustée de telle sorte que la quantité totale de substance active/substances actives et de substance protectrice/substances protectrices qui est ajoutée lors de la fabrication des systèmes de produits corresponde à 50 % en poids à 100 % en poids de la valeur d'absorption DBP du matériau support.

**17.** Procédé selon l'une quelconque des revendications 11 à 16, **caractérisé en ce que** la quantité ajoutée de substance protectrice/substances protectrices à l'étape g) est ajustée de telle sorte que la quantité totale de substance active/substances actives et de substance protectrice/substances protectrices qui est ajoutée lors de la fabrication des systèmes de produits soit supérieure au volume poreux total du matériau support et que l'excès de substance protectrice/substances protectrices soit absorbé par ajout de matériau support et/ou de matériau support chargé avec une substance active/des substances actives.

**18.** Procédé selon l'une quelconque des revendications 11 à 17, **caractérisé en ce que** l'intensité de mélange et le dosage sont accordés l'un à l'autre de manière à assurer la fluidité à la fin du processus d'application.

**19.** Procédé selon l'une quelconque des revendications 11 à 18, **caractérisé en ce que** les appareils d'agitation sont choisis de telle sorte qu'aucune abrasion n'ait lieu par cisaillement.

**20.** Utilisation d'un système de produits selon l'une quelconque des revendications 1 à 10 pour la fabrication de produits alimentaires, d'aliments pour animaux, de médicaments, d'articles pour l'agri- et la sylviculture, de cosmétiques, de composants pour formulations de revêtement et d'adhésion ou de composants pour équipements sportifs et vêtements de sport.

XPS

**Abbildung 1:** Prinzip der Röntgenphotoelektronenspektrometrie XPS/ESCA

**Abbildung 2:** XPS/ESCA-Spektrum für Trifluoressigsäure

**Abbildung 3:**

XPS-Übersichtsspektrum Sipernat® 50 beladen mit 20 Gew. %
2-Mi, hergestellt  nach dem erfindungsgemäßen Verfahren

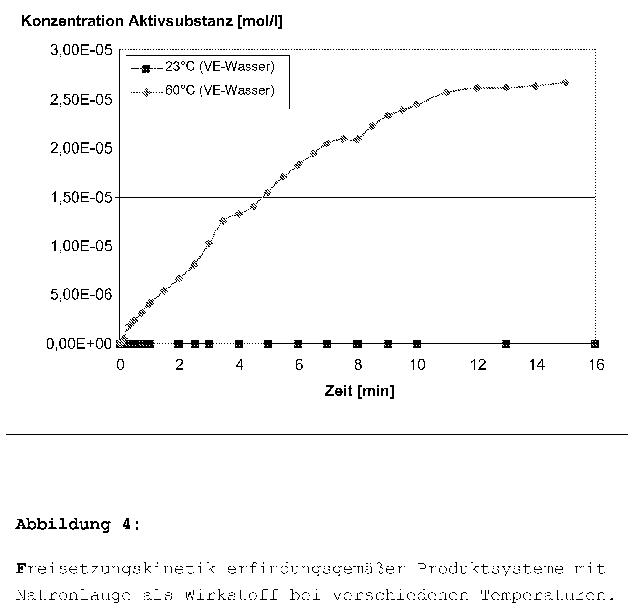

**Abbildung 4:**

**F**reisetzungskinetik erfindungsgemäßer Produktsysteme mit Natronlauge als Wirkstoff bei verschiedenen Temperaturen.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2004072153 A
- WO 03033027 A
- WO 02098998 A
- WO 0051724 A
- WO 2006004481 A
- CH 573212
- EP 0454881 A
- CA 2438438
- US 4414005 A
- WO 03082360 A
- EP 0005302 A
- US 5500138 A
- US 5084440 A
- US 053851 A4
- US 4065564 A
- US 4073880 A
- US 4278655 A
- GB 2018590 A
- EP 0170386 A
- WO 2007048464 A

### In der Beschreibung aufgeführte Nicht-Patentliteratur

- Modified-Release Drug Delivery Technology. Marcel Dekker Inc, 2003
- Controlled release of pesticides from microparticles. **PARK et al.** Controlled-Release Delivery Systems for Pesticides. Marcel Dekker Inc, 1999, 89-136
- *CHEMICAL ABSTRACTS,* 5413-60-5
- *CHEMICAL ABSTRACTS,* 17511-60-3
- *CHEMICAL ABSTRACTS,* 1310-73-2
- *CHEMICAL ABSTRACTS,* 110-54-3
- *CHEMICAL ABSTRACTS,* 64-17-5
- *CHEMICAL ABSTRACTS,* 57-11-4
- *CHEMICAL ABSTRACTS,* 8002-74-2
- *CHEMICAL ABSTRACTS,* 693-98-1